(19) Europäisches Patentamt
European Patent Office
Office européen des brevets

(11) **EP 1 770 885 B1**

(12) **FASCICULE DE BREVET EUROPEEN**

(45) Date de publication et mention
de la délivrance du brevet:
**12.12.2007  Bulletin 2007/50**

(51) Int Cl.:
***H04H 3/00*** *(2006.01)*    *H04H 1/00* *(2006.01)*

(21) Numéro de dépôt: **06291419.7**

(22) Date de dépôt: **08.09.2006**

(54) **Procédé et système de planification automatique de retards des temps d'émission des émetteurs d'un réseau de diffusion synchrone en temps et en fréquence**

Verfahren und Vorrichtung zur automatischen Planung von Verzögerungen zwischen Sendezeiten von Sender in einem synchronen Einfrequenznetzes

Method and system for automatically planning delays between transmitting times of transmitters in a synchronous single frequency network

(84) Etats contractants désignés:
**AT BE BG CH CY CZ DE DK EE ES FI FR GB GR HU IE IS IT LI LT LU LV MC NL PL PT RO SE SI SK TR**

(30) Priorité: **30.09.2005  FR 0510009**

(43) Date de publication de la demande:
**04.04.2007  Bulletin 2007/14**

(73) Titulaire: **Societé Française du Radiotéléphone
75008 Paris (FR)**

(72) Inventeur: **Vincent, François
92140 Clamart (FR)**

(74) Mandataire: **Debay, Yves
Cabinet Debay,
126 Elysée 2
78170 La Celle Saint Cloud (FR)**

(56) Documents cités:
• **BEUTLER R: "DIGITAL SINGLE FREQUENCY NETWORKS IMPROVING OPTIMIZATION STRATEGIESOPTIMIZATION STRATEGIES BY PARALLEL COMPUTING" FREQUENZ, SCHIELE UND SCHON, BERLIN, DE, vol. 52, no. 5/6, mai 1998 (1998-05), pages 90-95, XP000846698 ISSN: 0016-1136**
• **LAFLIN N J ET AL: "Coverage planning for digital terrestrial television" BROADCASTING CONVENTION, 1995. IBC 95., INTERNATIONAL AMSTERDAM, NETHERLANDS, LONDON, UK, IEE, UK, 1995, pages 85-93, XP006528911 ISBN: 0-85296-644-X**
• **"Digital Video Broadcasting (DVB); Implementation guidelines for DVB terrestrial services; Transmission aspects; ETSI TR 101 190" ETSI STANDARDS, EUROPEAN TELECOMMUNICATIONS STANDARDS INSTITUTE, SOPHIA-ANTIPO, FR, vol. BC, no. V121, novembre 2004 (2004-11), XP014027118 ISSN: 0000-0001**
• **LEWIS A R ET AL: "DAB: going live-implementing a national single frequency network" BROADCASTING CONVENTION, 1995. IBC 95., INTERNATIONAL AMSTERDAM, NETHERLANDS, LONDON, UK, IEE, UK, 1995, pages 62-66, XP006528906 ISBN: 0-85296-644-X**
• **LEE M B R: "Planning methods for a national single frequency network for DAB" ANTENNAS AND PROPAGATION, 1993., EIGHTH INTERNATIONAL CONFERENCE ON EDINBURGH, UK, LONDON, UK, IEE, UK, 1993, pages 940-947, XP006514057 ISBN: 0-85296-572-9**
• **BRUGGER R ET AL: "OFDM Receivers - Impact on Coverage of Inter-Symbol Interference and FFT Window Positioning" EBU REVIEW TECHNICAL, EUROPEAN BROADCASTING UNION, GENEVA, CH, no. 295, juillet 2003 (2003-07), pages 1-12, XP002317591 ISSN: 1018-7391**

EP 1 770 885 B1

## Description

DOMAINE TECHNIQUE DE L'INVENTION

La présente invention est du domaine des télécommunications et concerne la gestion de retards des temps d'émission des émetteurs d'un réseau radio permettant de diffuser des programmes par exemple selon la norme DVB-H (Digital Video Broadcast - Handheld) ou d'autres standards de télédiffusion. L'invention concerne plus particulièrement un procédé et un système de planification automatique de retards des temps d'émission des différents émetteurs composant un réseau de diffusion radio synchrone en temps et en fréquence, permettant une télédiffusion numérique avec une seule fréquence UHF (Ultra High frequencies) vers des terminaux mobiles radio sur un large territoire.

L'invention s'applique au domaine des transmissions basées sur de l'OFDM. La technologie OFDM (Orthogonal Frequency Duplex Modulation) est un procédé de modulation numérique des signaux qui est utilisé, entre autres, pour les systèmes de transmissions mobiles à haut débit de données. L'OFDM est particulièrement bien adapté aux canaux de transmission radio avec transmissions d'ondes multiples (échos) dues aux réflexions des ondes sur des obstacles. En effet, lorsqu'elles se combinent, les transmissions multiples modifient, voire détruisent le signal émis et font que le même signal est reçu plusieurs fois avec des temps décalés.

ARRIERE-PLAN TECHNOLOGIQUE DE L'INVENTION

Les technologies d'émission numérique, telles que la diffusion vidéo numérique - terrestre DVB-T (Digital Video Broadcasting - Terrestrial) pour l'Europe et la diffusion numérique de services intégrés (Integrated Services Digital Broadcasting - Terrestrial) pour le Japon, ont fait entrer la diffusion TV dans l'âge numérique. En parallèle, le développement du réseau Internet, et surtout la généralisation des accès à haut débit, offrent la possibilité technique de diffuser des services audio et vidéo sur ce réseau à destination de terminaux. La norme émergente DVB-H correspond à une étape supplémentaire par rapport à la norme DVB-T, en rendant possible la réception de la radiodiffusion numérique par des terminaux mobiles.

La planification des réseaux DVB-H nécessite dès la conception de considérer les caractéristiques des conditions d'usage particulières à la réception de la TV par un récepteur portable et mobile. A l'instar de la téléphonie mobile, il faut prendre en compte le fait que ces usages se produisent principalement à l'intérieur des bâtiments et en déplacement.

Au sein d'un réseau, les signaux radio électriques reçus par un récepteur sont souvent composés de plusieurs instances du signal émis. C'est en particulier le cas lorsque l'environnement proche de l'émetteur ou du récepteur n'est pas dégagé et lorsque de multiples trajets sont nécessaires (par exemple communication avec un mobile de type cellulaire). C'est également le cas lorsque le même signal est diffusé depuis plusieurs points d'émission (réseau de paging selon un système de radiomessagerie numérique de type ERMES, réseaux de broadcast numérique, ou encore diversité d'émission...). En conséquence, des dispositifs techniques doivent être mis au point pour prendre en compte ces phénomènes.

La technologie OFDM est largement déployée dans des réseaux multi-fréquences en raison des débits élevés souhaités dans les technologies radio de diffusion numérique : c'est le cas du DVB pour ses composantes terrestres (DVB-T) et mobile (DVB-H), ainsi que des technologies DAB (Digital Audio Broadcasting) et DMB (Digital Multimédia Broadcasting). Comme les différents dispositifs de réception sont limités par leur sensibilité pour recevoir les différentes composantes utiles du signal dans un même temps d'intégration donné, il est souhaitable d'utiliser la modulation OFDM. En effet, cette modulation prévoit entre chaque symbole un délai non porteur d'information permettant, à la réception, l'intégration de l'ensemble des signaux reçus, sous réserve qu'il n'y ait pas de signaux excessivement retardés. On comprend alors qu'avec une technologie OFDM, certaines zones offrent une qualité de communication insuffisante à cause des brouillages résultant d'une réception tardive de signaux émis via des trajets "retardés".

Il est connu selon le "jeune" art antérieur des outils de gestion d'émetteurs de diffusion, nécessitant des ajustements au cas par cas. Ces outils permettent parfois de visualiser une cartographie des brouillages générés par les différences de temps de propagation et fournissent ainsi des informations utiles pour ajuster "manuellement" les retards pour éliminer les brouillages.

BEUTLER R: "DIGITAL SINGLE FREQUENCY NETWORKS IMPROVING OPTIMIZATION STRATEGIESOPTIMIZATION STRATEGIES BY PARALLEL COMPUTING" FREQUENZ, SCHIELE UND SCHON, BERLIN, DE, vol. 52, no. 5/6, mai 1998 (1998-05), pages 90-95, ISSN: 0016-1136 décrit un procédé de planification de retards des temps d'émission de différents émetteurs radio d'un réseau en onde commune. Le document décrit deux algorithmes pour déterminer itérativement, en utilisant un système informatique, les retards pour optimiser la zone de service. Les prédictions de service sont basées sur des paramètres de réseau comme le nombre et les positions des émetteurs, leur puissance d'émission effective et leur diagramme de rayonnement, et sur des caractéristiques de propagation radio déterminées pour M points de test dans la zone considérée.

Il n'existe actuellement pas de solution satisfaisante pour gérer les retards qui provoquent des brouillages au sein d'un réseau de télédiffusion radio, et il est difficile pour un opérateur d'assurer une qualité de service acceptable avec les outils existants.

DESCRIPTION GENERALE DE L'INVENTION

La présente invention a donc pour objet de supprimer un ou plusieurs des inconvénients de l'art antérieur en définissant un procédé de planification de retards des temps d'émission des différents émetteurs composant un réseau de diffusion radio synchrone en temps et en fréquence, permettant de faciliter l'obtention d'une qualité de réception optimale dans les différents points du réseau.

Un objet supplémentaire de l'invention est de permettre l'obtention d'un réseau de télédiffusion numérique optimisé utilisant une seule fréquence tout en assurant une couverture dense d'un territoire étendu, avec un minimum de brouillages.

Un objet supplémentaire de l'invention est de tenir compte de façon pragmatique des particularités des zones de couverture de chaque émetteur (réalité du terrain) pour assurer une qualité de service appropriée pour les abonnés, sur l'ensemble de la couverture.

A cet effet, l'invention concerne un procédé de planification automatique de retards des temps d'émission de différents émetteurs radio générant avec une même fréquence des cellules radio pour former un réseau radio de télédiffusion numérique synchrone en temps et en fréquence, mis en oeuvre par l'intermédiaire d'un système informatique comprenant des moyens de mémorisation pour stocker des données relatives au réseau incluant des données représentatives de zones géographiques découpées en une pluralité de points ou pixels selon le découpage dudit réseau et comportant la position des émetteurs radio, des données de démographie en correspondance avec le découpage du réseau, des données spécifiant un niveau d'émission d'émetteurs et un niveau de seuil de sensibilité de réception radio de terminaux de la cellule, des données représentatives d'une loi d'atténuation de propagation radio et des données représentatives d'une durée des intervalles de garde prévus entre des trames de données, le système comprenant en outre un module de calcul et des moyens de paramétrage d'une pluralité d'émetteurs radio, le procédé comprenant pour chaque émetteur radio une étape de déclenchement d'une émission à un instant déterminé, caractérisé en ce qu'il comporte une étape de traitement des données relatives au réseau utilisant le module de calcul pour calculer des données représentant des chiffres de population située dans des zones de brouillage nuisible et une étape d'ajustement de ladite étape de déclenchement effectuée pour chaque émetteur radio en utilisant un retard d'émission variant entre 0 et une valeur non nulle inférieure à 1 ms avec mémorisation pour chaque émetteur radio du retard utilisé, l'étape d'ajustement étant suivie d'une réitération de l'étape de traitement pour estimer à nouveau des chiffres de population située dans des zones de brouillage nuisible, l'étape de traitement étant réitérée avec un nombre d'itérations paramétré à l'aide de moyens de configuration du système, l'étape d'ajustement étant finalisée à l'issue des itérations en utilisant une combinaison mémorisée de retards utilisés pour chaque émetteur de l'ensemble des émetteurs qui permet d'atteindre un minimum pour lesdits chiffres de population estimés dans des zones de brouillage nuisible.

L'invention permet ainsi de planifier automatiquement les retards d'émission dans un réseau ayant une topologie de type SFN (Single Frequency Network), ce qui autorise une gestion de réseaux complexes de plusieurs milliers de sites « isofréquence » qu'il serait totalement impossible en pratique de gérer à la main.

Selon une autre particularité, l'étape de traitement des données relatives au réseau comprend :

- une étape de détermination d'une couverture radio du réseau, incluant un traitement par le module de calcul des données de carte géographique comportant la position des émetteurs radio, des données spécifiant un niveau d'émission d'émetteurs et un niveau de seuil de sensibilité de réception radio de terminaux de la cellule et des données représentatives d'une loi d'atténuation de propagation radio, pour générer des données représentatives de cartes de couverture du réseau qui spécifient, pour chacun des émetteurs, des niveaux de champ des signaux reçus en chacun des pixels ;
- pour chaque émetteur radio, une étape d'estimation d'un signal utile et d'un signal d'interférences dans des pixels du réseau, à l'aide d'une décomposition par le module de calcul des niveaux de champ des signaux reçus via le réseau en une composante utile et une composante brouilleuse, le module de calcul utilisant une fonction de pondération paramétrable pour réaliser ladite décomposition.

Selon une autre particularité, l'étape de traitement des données relatives au réseau comprend, pour chaque émetteur radio :

- une étape de calcul d'une probabilité de brouillage pour chaque pixel, dans laquelle une valeur représentative du ratio signal sur perturbation est d'abord calculée par le module de calcul pour chaque pixel à partir des signaux estimés associés aux pixels respectifs, ladite perturbation étant composée des interférences intercellulaires et du bruit relatif à la largeur de canal utilisée par les émetteurs de la cellule, puis la probabilité de brouillage dans le pixel est déduite des calculs dudit ratio dans les pixels par le module de calcul ; et

- une étape de détermination d'un critère représentatif de la population totale située dans des zones de brouillage nuisible, ledit critère étant déterminé par le module de calcul à partir des probabilités de brouillage en chaque pixel et des données de démographie en correspondance avec le découpage du réseau.

Selon une autre particularité, l'étape d'ajustement de ladite étape de déclenchement est réalisée de façon déterminée par le module de calcul pour atteindre un minimum de la somme desdits critères calculée par intégration sur l'ensemble des émetteurs, ledit minimum résultant notamment d'au moins une comparaison par des moyens de comparaison du module de calcul entre plusieurs solutions distinctes d'ajustement des retards d'émission au sein du réseau.

Selon une autre particularité, la probabilité de brouillage dans chaque pixel est déduite des calculs dudit ratio dans les pixels de la cellule par des moyens de comparaison du module de calcul, une valeur de ratio minimum étant stockée dans les moyens de mémorisation et utilisée par les moyens de comparaison pour déterminer pour chaque pixel si le ratio minimum n'est pas atteint et permettre ainsi l'obtention de la probabilité de brouillage pour le pixel.

Selon une autre particularité, l'étape d'ajustement utilise des valeurs réparties avec un pas compris entre 1 $\mu$s et 45 $\mu$s dans une gamme de valeurs dont l'amplitude reste inférieure à 500 $\mu$s.

Selon une autre particularité, l'étape d'ajustement utilise des valeurs réparties avec un pas compris entre 5 $\mu$s et 45 $\mu$s dans une gamme de valeurs dont l'amplitude reste inférieure à 500 $\mu$s.

Selon une autre particularité, l'étape de déclenchement d'une émission à un instant déterminé comprend une division d'un signal reçu par l'émetteur en une pluralité de signaux d'émission sur une pluralité de sous-porteuses suivant une modulation numérique de fréquence de type OFDM, des intervalles de garde ayant une même durée déterminée de transmission étant insérés entre des trames de données constituant des symboles modulés en OFDM, la durée de transmission des intervalles de garde étant une constante fonction de la durée de transmission d'un symbole.

Selon une autre particularité, le procédé selon l'invention comprend une étape de mémorisation de données de densité de trafic d'utilisateurs d'un réseau de radiotéléphonie à utiliser en remplacement des données de démographie.

Selon une autre particularité, l'étape de détermination d'une couverture radio comporte une étape de détermination par le module de calcul, pour chaque pixel, d'une distance respective entre chaque émetteur et le pixel à considérer, suivie d'une étape de correction par le module de calcul de cette distance par prise en compte du retard paramétré pour les émetteurs respectifs à l'aide des moyens d'ajustement des retards.

Un autre objet de l'invention est de proposer un système adapté pour paramétrer un réseau de télédiffusion sur un territoire étendu, en utilisant une seule fréquence tout en assurant une couverture dense d'un territoire étendu, avec un minimum de brouillages pour l'usager.

A cet effet, l'invention concerne un système de planification automatique de retards des temps d'émission de différents émetteurs radio générant avec une même fréquence des cellules radio pour former un réseau radio de télédiffusion numérique synchrone en temps et en fréquence, comprenant des moyens de mémorisation pour stocker des données relatives au réseau incluant des données représentatives de zones géographiques découpées en une pluralité de points ou pixels selon le découpage dudit réseau et comportant la position des émetteurs radio, des données de démographie en correspondance avec le découpage du réseau, des données spécifiant un niveau d'émission d'émetteurs et un niveau de seuil de sensibilité de réception radio de terminaux de la cellule, des données représentatives d'une loi d'atténuation de propagation radio et des données représentatives d'une durée des intervalles de garde prévus entre des trames de données, le système comprenant en outre un module de calcul et des moyens de paramétrage d'une pluralité d'émetteurs radio, caractérisé en ce qu'il comprend des moyens de déclenchement d'une émission à un instant déterminé pour chaque émetteur radio, le module de calcul étant agencé pour calculer, par un traitement des données relatives au réseau, des données représentant des chiffres de la population située dans des zones de brouillage nuisible, lesdits moyens de paramétrage étant aptes à utiliser des retards qui sont stockés dans les moyens de mémorisation, des moyens de contrôle des moyens de déclenchement étant prévus pour retarder l'émission au niveau de chaque émetteur radio, avec un retard variant entre 0 et une valeur non nulle inférieure à 1 ms, ce retard étant mémorisé pour chaque émetteur radio, des moyens d'ajustement des retards étant reliés aux moyens de contrôle pour fournir différentes combinaisons de retards pour l'ensemble des émetteurs, le module de calcul étant doté de moyens d'itérations permettant de faire calculer à nouveau des chiffres de la population située dans des zones de brouillage nuisible pour des combinaisons distinctes de retards, des moyens de configuration du système étant en liaison avec le module de calcul pour fournir un nombre d'itérations permettant de désactiver les moyens d'itérations, lesdits moyens de contrôle étant aptes à utiliser, parmi les combinaisons fournies par les moyens d'ajustement de retards, une combinaison de retards pour l'ensemble des émetteurs qui correspond à l'obtention par le module de calcul d'un minimum pour lesdits chiffres de population estimés.

Selon une autre particularité, le module de calcul dispose, pour calculer les données représentant des chiffres de la population située dans des zones de brouillage nuisible :

- de moyens pour déterminer une couverture radio du réseau, aptes à traiter les données de carte géographique comportant la position des émetteurs radio, les données spécifiant un niveau d'émission d'émetteurs et un niveau de seuil de sensibilité de réception radio de terminaux de la cellule et les données représentatives d'une loi d'atténuation de propagation radio, pour générer des données représentatives de cartes de couverture du réseau qui spécifient, pour chacun des émetteurs, des niveaux de champ des signaux reçus en chacun des pixels ;
- des moyens d'estimation pour chaque émetteur radio, d'un signal utile et d'un signal d'interférences dans des pixels du réseau, ces moyens d'estimation étant aptes à décomposer des niveaux de champ des signaux reçus via le réseau en une composante utile et une composante brouilleuse, et à utiliser une fonction de pondération paramétrée à l'aide des moyens de configuration pour réaliser ladite décomposition ;
- des moyens de détermination, pour chaque émetteur radio, d'une probabilité de brouillage pour chaque pixel, agencés pour calculer une valeur représentative du ratio signal sur perturbation pour chaque pixel à partir des signaux estimés associés aux pixels respectifs fournis par les moyens d'estimation, ladite perturbation étant composée des interférences intercellulaires et du bruit relatif à la largeur de canal utilisée par les émetteurs de la cellule, lesdits moyens de détermination calculant la probabilité de brouillage dans le pixel à partir des calculs dudit ratio dans les pixels ;
- des moyens d'association permettant, pour chaque émetteur, de déterminer un critère représentatif de la population totale située dans des zones de brouillage nuisible, ledit critère étant déterminé par association de la probabilité de brouillage en chaque pixel et des données de démographie en correspondance avec le découpage du réseau.

Selon une autre particularité, le module de calcul détermine la combinaison de retards à utiliser par les moyens de contrôle en utilisant des moyens de comparaison du module de calcul prévus pour déterminer, parmi une pluralité de sommes des critères, correspondant respectivement aux différentes combinaisons de retards, un minimum de la somme desdits critères calculée par intégration sur l'ensemble des émetteurs.

Selon une autre particularité, la probabilité de brouillage dans chaque pixel est déduite des calculs dudit ratio dans les pixels de la cellule par des moyens de comparaison du module de calcul, une valeur de ratio minimum étant stockée dans les moyens de mémorisation et utilisée par les moyens de comparaison pour déterminer pour chaque pixel si le ratio minimum n'est pas atteint et permettre ainsi l'obtention de la probabilité de brouillage pour le pixel.

Un autre objet de l'invention est de proposer un réseau adapté à permettre une télédiffusion sur un territoire étendu, en assurant une couverture continue qui prend en compte la réalité du terrain et minimise le risque de brouillage pour l'usager.

A cet effet, l'invention concerne un réseau pour la diffusion de radiocommunications contenant au moins un programme TV ou radio, caractérisé en ce qu'il consiste en un réseau de radiotéléphonie comprenant une pluralité de sites émetteurs formant des cellules radio respectives définissant ensemble une couverture radio, et en ce que tous ces sites sont équipés d'émetteurs pour la diffusion de TV ou de radio et qu'ils sont tous paramétrés avec une même fréquence UHF pour générer une cellule radio, les émetteurs étant agencés pour envoyer des trames constituant un symbole modulé en OFDM avec un intervalle de garde correspondant à une fraction comprise entre un quart et un seizième de la durée de transmission d'une trame, les émetteurs étant agencés pour déclencher leur émission respective avec un décalage ou retard déterminé variant entre 0 et une valeur non nulle inférieure à 1 ms et ne dépassant pas le double de la durée de l'intervalle de garde, ledit réseau utilisant une combinaison de retards adaptée pour minimiser le nombre de zones de brouillage nuisible coïncidant avec des zones peuplées.

L'invention, avec ses caractéristiques et avantages, ressortira plus clairement à la lecture de la description faite en référence aux dessins annexés donnés à titre d'exemples non limitatifs dans lesquels :

- la figure 1 représente schématiquement le système informatique selon l'invention et une partie du réseau ;
- la figure 2 illustre l'adjonction de l'intervalle de garde entre les symboles successifs ;
- la figure 3 représente la correspondance entre l'éloignement de cellules et la génération d'interférences destructives, compte tenu de l'intervalle de garde retenu ;
- la figure 4 représente un logigramme des étapes du procédé selon un mode de réalisation de l'invention ;
- la figure 5 représente des composantes de signaux reçus dans une zone du réseau correspondant à un pixel ;
- la figure 6 illustre, à travers la représentation de cartes numériques utilisées selon le procédé de planification des retards de l'invention, une possibilité d'amélioration de la qualité dans une partie du réseau ;
- la figure 7 illustre, à travers la représentation de cartes numériques utilisées selon le procédé de l'invention, l'incidence d'un décalage d'émission trop important pour un émetteur du réseau ;
- la figure 8 représente un logigramme des étapes du procédé selon un mode de réalisation de l'invention.

DESCRIPTION DES MODES DE REALISATION PREFERES DE L'INVENTION

Dans l'OFDM (Orthogonal Frequency Duplex Modulation), le signal est multiplexé sur un grand nombre de sous-porteuses, de sorte que le débit sur chacune des sous-porteuses est réduit. Ainsi, la durée de symbole est augmentée et il est permis de limiter le risque d'interférence inter-symbole. Il est rappelé ici qu'un symbole (S) donné achemine un certain nombre de bits d'informations.

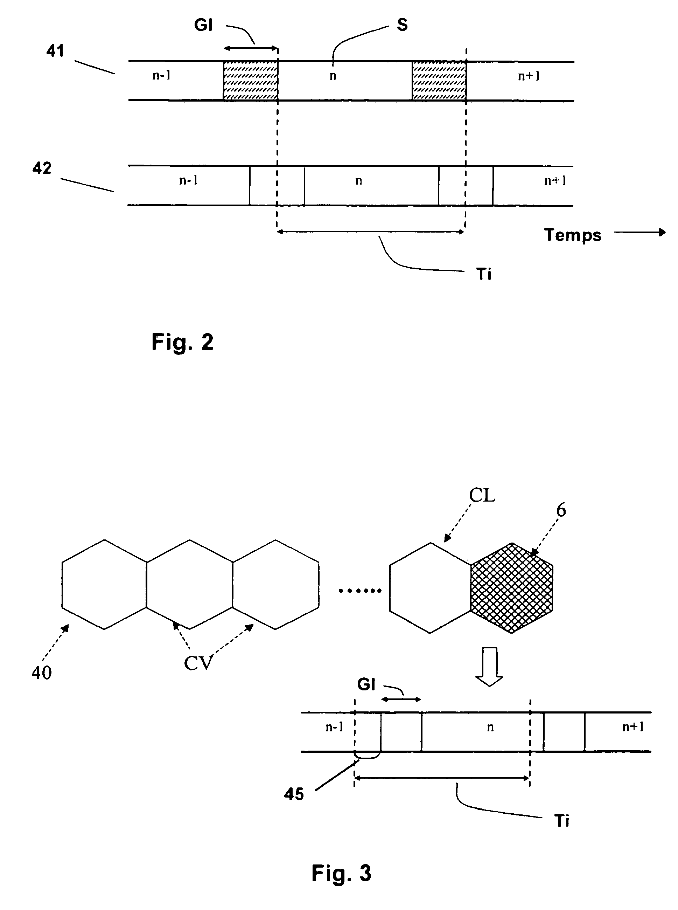

Grâce à un espacement rigoureusement régulier entre les porteuses, ces dernières forment ce que les mathématiciens appellent un ensemble orthogonal. L'espacement en fréquence $f_u$ est l'inverse de la période utile $T_u$ (ou période active) du symbole pendant laquelle le récepteur intègre le signal démodulé. Outre le multiplexage de l'information sur différentes sous-porteuses à bas débit, l'OFDM prévoit entre chaque symbole un délai non porteur d'information permettant à la réception l'intégration de l'ensemble des signaux reçus. L'adjonction de ce délai appelé intervalle de garde (GI, Fig. 2) entre les symboles successifs permet de conserver le critère d'orthogonalité pour des trajets retardés.

Ces propriétés de l'OFDM qui permettent naturellement de s'adapter aux multitrajets de propagation propres aux environnements urbains et/ou de communication avec les mobiles, sont avantageusement utilisées dans le procédé de l'invention pour permettre de diffuser une même information depuis plusieurs émetteurs différents, et cela avec la même fréquence. Le procédé peut servir à définir une couverture radio permettant une diffusion de type DVB avec une seule fréquence UHF, par l'intermédiaire d'un réseau doté d'une pluralité de moyens d'émission de stations de base permettant de générer des cellules radio, et ce sans limitation de surface à couvrir. L'invention vise en effet à établir une couverture DVB, par exemple DVB-H, ou toute autre télédiffusion numérique analogue sur un réseau SFN. Bien entendu, tous les émetteurs (4) sont précisément synchronisés en fréquence et sont synchronisés dans le temps, c'est-à-dire qu'ils transmettent les informations au même instant. Les contenus diffusés sont en outre rigoureusement identiques.

Le procédé de l'invention prévoit de déclencher une émission à un instant déterminé en divisant le signal reçu par l'émetteur (4) en une pluralité de signaux d'émission sur une pluralité de sous-porteuses suivant une modulation numérique de fréquence de type OFDM. Ces signaux seront envoyés simultanément par cet émetteur (4). Des intervalles de garde (GI) ayant une même durée déterminée de transmission sont insérés entre les trames de données constituant les symboles (S) modulés en OFDM et la durée de transmission de ces intervalles de garde (GI) est fixée comme étant une constante fonction de la durée de transmission d'un symbole (S).

L'invention permet ainsi la conception d'un réseau pour la diffusion de radiocommunications, contenant au moins un programme TV. L'architecture du réseau est de type radiotéléphonique et permet grâce aux sites émetteurs de définir une couverture radio continue sur un vaste territoire. Tous les sites émetteurs sont paramétrés avec la même fréquence UHF et sont agencés pour envoyer les trames avec un intervalle de garde (GI) correspondant par exemple à une fraction comprise entre un quart et un huitième voire un seizième de la durée de transmission d'une trame.

En référence à la figure 2, alors qu'un trajet principal (41) ne pose pas de problème de brouillage, il apparaît que pour un trajet retardé (42), la période du symbole doit être prolongée à l'aide de l'intervalle de garde (GI) pour éviter que la période d'intégration (Ti) ne porte sur deux symboles. Tant que certaines composantes du signal sont reçues avec du retard à l'intérieur de l'intervalle de garde, il n'y a pas d'interférence avec le symbole (S) suivant. En revanche, dès lors que l'une des composantes déborde ce délai, elle crée des interférences sur le symbole suivant. Un tel problème peut être résolu en augmentant la durée de l'intervalle de garde (GI). Dans un mode de réalisation de l'invention, la durée non porteuse de signal correspondant aux intervalles de garde (GI) n'excède pas le quart de la durée de transmission d'une trame constituant un symbole modulé en OFDM. Ainsi, la bande passante disponible ne sera pas trop réduite. Cette durée de l'intervalle de garde (GI) est alors la même pour tous les émetteurs (4) diffusant un même signal sur une même fréquence.

Le procédé selon l'invention vise à prendre en compte la durée de l'intervalle de garde (GI) pour permettre de réduire les problèmes de brouillage. En particulier, le procédé a pour objet de réaliser automatiquement, pour chaque émetteur radio (4), des ajustements ou décalages du déclenchement d'une émission permettant "d'absorber" les signaux gênants reçus en retard tout en permettant de minimiser le nombre total d'émetteurs (4). Autrement dit, les signaux fournis simultanément aux émetteurs (4) du réseau (N) vont être émis le cas échéant avec des retards ou avec de l'avance (de l'ordre de 0 à 500 µs par exemple) par rapport à un instant de référence de synchronisation des émissions. L'ajustement des instants relatifs d'émission des différentes sources d'émission doit être effectué de façon optimale pour réduire au maximum les zones de brouillage coïncidant avec des zones peuplées ou avec des zones à fort trafic d'utilisateurs du réseau de radiotéléphonie utilisant leur terminal mobile (par exemple des routes ou voies ferrées où les usagers utilisent couramment leur téléphone portable pour recevoir des contenus diffusés via le réseau).

Comme illustré à la figure 3, pour les cellules (6) de la couronne la plus proche à interférer, le retard (45) relatif est inférieur à une période de symbole : seule une partie du signal transmise sur ce trajet agit comme un brouillage, puisqu'elle n'achemine que des informations appartenant au symbole précédent. Le reste achemine certes des informations du symbole utile, mais peut s'ajouter de manière constructive ou destructive aux informations du trajet principal.

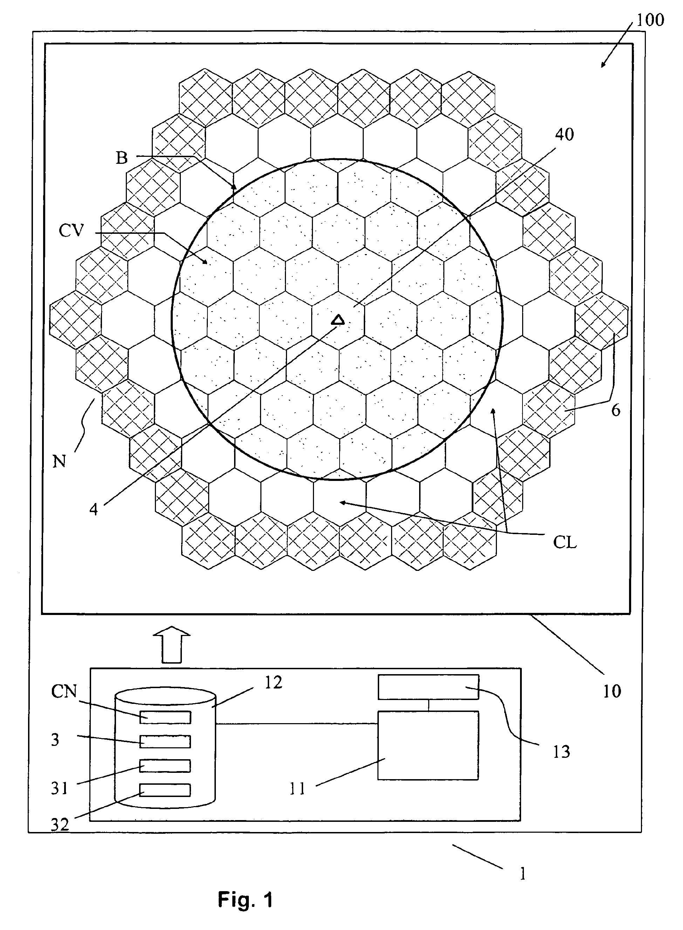

La figure 1 représente, sur un dispositif d'affichage (10) d'un système informatique (1), une carte (100) d'une zone géographique d'un réseau (N) de télédiffusion numérique en cours de définition ou d'optimisation, sur laquelle ont été reportées les positions prévues de cellules radio (CV, CL, 6) entourant la cellule (40) générée par l'émetteur (4) de position indiquée. On comprend ici que la terminologie « émetteur » doit être prise au sens large, comme signifiant un ou plusieurs appareils d'émission radio permettant de générer une cellule radio. Comme représenté, les cellules voisines (CV) proches de la cellule (40) étudiée sont localisées dans une zone de brouillage (B) dans laquelle les signaux les plus retardés émis par l'émetteur (4) indiqué sont reçus dans l'intervalle de garde (GI). Pour ce mode de réalisation de la figure 1 qui correspond à un fonctionnement correct du réseau (N) à une seule fréquence, les cellules (CL) de la première couronne située au-delà de la zone de brouillage (B) permettent tout de même une réception des signaux envoyés par l'émetteur (4) dans l'intervalle de garde (GI). Les cellules (6) les plus éloignées qui ne permettent pas la réception des signaux dans l'intervalle de garde (GI) ne posent pas de problème de brouillage puisqu'elles sont situées en dehors de la zone de brouillage (B) de l'émetteur (4).

La carte (100) est une représentation de données d'une carte numérique (CN) stockée dans des moyens de mémorisation (12) du système informatique (1), tels qu'une base de données. Les moyens de traitement de calcul, ou unité centrale, de mémorisation, de saisie et de présentation de données, par un clavier et/ou un écran d'affichage interactif avec souris ou autres, n'ont pas été représentés en détail dans le système informatique (1). La carte numérique (CN) spécifie les reliefs naturels et artificiels, ainsi que leur nature, telle que forêt, immeubles et autres, ce qui permet de calculer une estimation de l'atténuation radio de liaisons affectées par les reliefs.

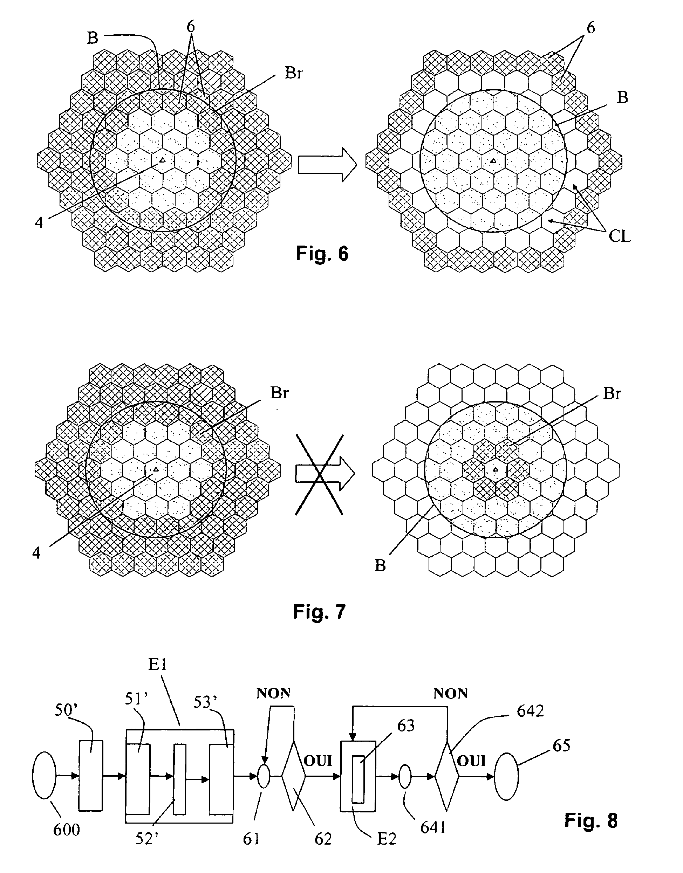

En référence à la figure 1, l'émetteur (4) à régler produit une zone de brouillage (B) qui s'étend sur plusieurs cellules voisines (CV). Les cellules sont représentées ici selon un modèle hexagonal. Pour un réseau (N) de type SFN faisant intervenir un temps de garde (GI), un fonctionnement correct se rencontre lorsque la zone constituée des cellules (CL) recevant les signaux retardés dans l'intervalle de garde (GI) s'étend au-delà de la zone de brouillage (B) de l'émetteur (4). En revanche, comme illustré à gauche dans les figures 6 et 7, le réseau (N) produit des interférences lorsque la zone de brouillage (B) s'étend au-delà de l'ensemble des cellules (CL) pour lesquelles la correction par l'intervalle de garde (GI) est encore possible. Il apparaît alors des zones (Br) de brouillage nuisible, dans lesquelles un utilisateur ne pourra pas recevoir les signaux issus de l'émetteur (4) considéré avec une qualité suffisante.

Le procédé selon l'invention intervient pour ajuster les instants relatifs d'émission des différents émetteurs (4) de façon à minimiser l'auto brouillage, illustré aux figures 6 et 7, du réseau (N) de type SFN. Par rapport à un moment de référence, on comprend que l'émission de l'émetteur (4) à régler peut être avantageusement avancée pour que les signaux reçus dans la zone de brouillage (B) arrivent à destination des récepteurs au plus tard dans l'intervalle de garde (GI). Par un tel ajustement, l'émission effective prévue au départ peut donc être avancée pour certains émetteurs (4) tandis que les autres émetteurs auront nécessairement des retards par rapport à ce moment d'émission avancé (par rapport à la prévision initiale). Autrement dit, les émetteurs (4) qui reçoivent de façon synchrone les informations à transmettre à travers le réseau (N) vont pour la plupart avoir des décalages relatifs d'émission entre eux.

La figure 7 illustre le fait que l'avance par rapport au moment de référence pris au départ doit être limitée pour ne pas créer des interférences de proximité. Les zones (Br) de brouillage nuisible représentées à la figure 7 montrent ainsi que le décalage ne peut être paramétré que dans une marge limitée. Ainsi, avec le procédé selon l'invention, il peut être mis en place un réseau (N) pour la diffusion de radiocommunications incluant au moins un programme TV ou radio, dans lequel les émetteurs (4) sont agencés pour déclencher leur émission respective avec un décalage ou retard déterminé ne dépassant pas le double de la durée de l'intervalle de garde (GI). Ce retard varie par exemple entre 0 et une valeur non nulle inférieure à 1 ms. Les retards sont ainsi très limités de sorte que le réseau (N) reste synchrone et il est impossible de percevoir les décalages au niveau des utilisateurs. Le réseau (N) utilise alors une combinaison de retards adaptée pour minimiser le nombre de zones (Br) de brouillage nuisible coïncidant avec des zones peuplées.

Dans un mode de réalisation de l'invention, le procédé de planification automatique des retards est mis en oeuvre par l'intermédiaire d'un système informatique (1) tel que représenté à la figure 1. Ce système (1) comprend par exemple des moyens de mémorisation (12) permettant de stocker des données relatives au réseau (N) incluant :

- des données (3) représentatives de zones géographiques découpées en une pluralité de points ou pixels (301, 302, 303) selon le découpage dudit réseau (N) et comportant la position des émetteurs radio (4) ;
- des données de démographie en correspondance avec le découpage du réseau, des données (31) spécifiant un niveau d'émission d'émetteurs et un niveau de seuil de sensibilité de réception radio de terminaux de la cellule (1) ;
- des données (32) représentatives d'une loi d'atténuation de propagation radio ; et
- des données représentatives d'une durée des intervalles de garde (GI) prévus entre des trames de données.

Le système (1) comprend des moyens de paramétrage d'une pluralité d'émetteurs radio (4) et un module de calcul (11) permettant de traiter les données relatives au réseau (N) pour calculer des informations chiffrées représentant la population située dans des zones (Br) de brouillage nuisible. En référence à la figure 1, le système (1) comprend des moyens de déclenchement (non représentés) d'une émission à un instant déterminé pour chaque émetteur radio (4). Des moyens de contrôle des moyens de déclenchement sont prévus pour retarder l'émission au niveau de chaque émetteur radio (4). Des moyens d'ajustement des retards sont par exemple en liaison avec ces moyens de contrôle pour fournir différentes combinaisons de retards pour l'ensemble des émetteurs (4). Les moyens de paramétrage des émetteurs radio, regroupant par exemple les moyens de contrôle des moyens de déclenchement d'émission et les moyens d'ajustement des retards, permettent ainsi d'utiliser des retards qui sont stockés dans les moyens de mémorisation (12).

Le module de calcul (11) dispose en outre de moyens d'itérations permettant de faire calculer à nouveau des chiffres de la population située dans des zones (Br) de brouillage nuisible pour des combinaisons distinctes de retards. Comme illustré à la figure 1, le système (1) comporte des moyens de configuration (13) en liaison avec le module de calcul (11) pour fournir un nombre d'itérations permettant de désactiver les moyens d'itérations. Autrement dit, les opérations de calcul itérées pour converger vers une solution optimale sont stoppées dès lors que le nombre d'itérations paramétré à l'aide des moyens de configuration (13) par l'utilisateur est atteint.

Dans un mode de réalisation de l'invention, les moyens de contrôle peuvent utiliser, parmi les combinaisons fournies par les moyens d'ajustement de retards, une combinaison de retards pour l'ensemble des émetteurs (4) qui offre la plus grande qualité de service du point de vue des utilisateurs. Cette combinaison correspond ainsi à l'obtention par le module de calcul (11) d'un minimum pour l'estimation des chiffres de population localisée dans les zones (Br) de brouillage nuisible. Dans une variante de réalisation, les données de démographie peuvent être remplacées par des données de densité de trafic d'utilisateurs abonnés (utilisateurs d'un réseau de radiotéléphonie). Ces données de densité de trafic sont alors stockées dans les moyens de mémorisation (12) et les estimations effectuées par le module de calcul représenteront un trafic mal desservi à cause de brouillages nuisibles. On comprend ainsi que les données de démographie peuvent être remplacées selon l'invention par d'autres données relatives à une densité d'utilisation du service.

Dans un mode de réalisation préféré de l'invention, le module de calcul (11) dispose de moyens pour déterminer une couverture radio du réseau (N), permettant de traiter les données (3, 4, 31, 32) relatives au réseau (N) stockées dans les moyens de mémorisation (12) pour générer des données représentatives de cartes (CN) de couverture du réseau (N). Ces données spécifient, pour chacun des émetteurs (4), des niveaux de champ des signaux reçus en chacun des pixels (301, 302, 303). Le système informatique (1) permet ainsi de déployer les émetteurs (4) et de les représenter sur le dispositif d'affichage (10). L'opérateur peut ainsi visualiser tout ou partie du réseau (N) à planifier.

La zone de couverture de chaque émetteur est calculée en utilisant par exemple un modèle de prédiction, implémentant notamment la loi d'atténuation de propagation radio, qui est associé aux bases de données d'altimétrie et de morphologie (terrain) appropriées. Ce modèle de prédiction permet de caractériser les spécificités locales du réseau (N), grâce au découpage en pixels (301, 302, 303). Le niveau de réception depuis chaque émetteur (4) peut ainsi être calculé, en chaque pixel de la zone étudiée sur la carte (100). Des matrices associées à chacune des cellules radio peuvent aussi être calculées pour représenter ces niveaux de réception au niveau cellulaire. La couverture de chaque émetteur (4) ainsi calculée est mémorisée dans les moyens de mémorisation pour former lesdites données représentatives de cartes (CN) de couverture du réseau (N).

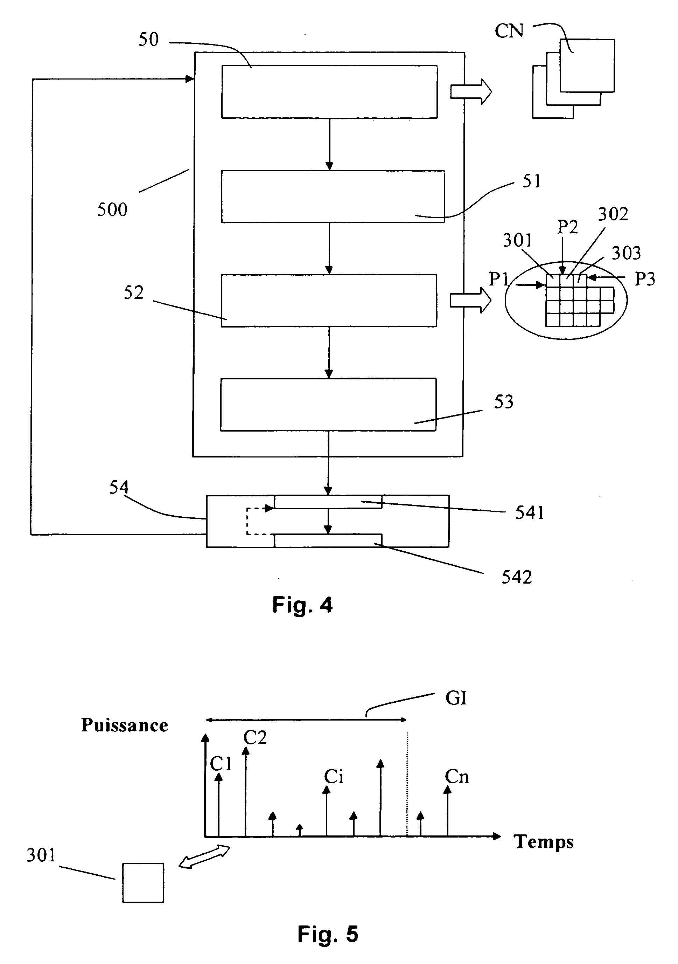

Le système informatique (1) permet ensuite d'estimer, à partir des couvertures respectives obtenues, le signal reçu de la part de chacun des émetteurs (4). Pour cela, le module de calcul (11) détermine pour chaque émetteur (4) une distance entre l'émetteur (4) et le pixel (301, 302, 303) à considérer, puis corrige cette distance de l'éventuel retard paramétré pour cet émetteur (4) à l'aide des moyens d'ajustement des retards. Autrement dit, pour un pixel (301) donné, les signaux reçus dans ce pixel (301) sont estimés avec leurs composantes dans le temps, la puissance de chacun de ces signaux étant également déterminée comme illustré à la figure 5. Les composantes (C1, C2, ..Ci, .., Cn) des signaux reçus issus des différents émetteurs (4) permettent d'estimer qualitativement le fonctionnement du réseau (N).

Chaque composante peut être obtenue à l'aide d'une fonction d'atténuation A(R) en fonction de la distance R par rapport à l'émetteur, selon la formule suivante :

$$C = P - A(R)$$

où P est la puissance émise et la fonction A(R) est une loi de propagation appropriée à la technologie et à l'environnement de travail, par exemple le modèle connu COST 231 donnant le champ résultant à une certaine distance R de l'émetteur (4).

Le module de calcul (11) comprend des moyens d'estimation déterminant, pour chaque émetteur radio (4), un signal utile et un signal d'interférences. Dans un mode de réalisation de l'invention, les signaux respectifs sont estimés dans des pixels (301, 302, 303) du réseau (N). Ces moyens d'estimation permettent par exemple de décomposer des niveaux de champ des signaux reçus en une composante utile et une composante brouilleuse. Une fonction de pondération paramétrée à l'aide des moyens de configuration (13) est utilisée pour réaliser cette décomposition. Chacune des composantes $C_i$ identifiées lors de la phase précédente par le module de calcul (11) peut se décomposer en une partie utile $C_iW_i$ et une partie brouilleuse $C_i(1-W_i)$. La répartition du poids des composantes utile et brouilleuse est fonction de la technologie mise en oeuvre. Le poids est par exemple choisi pour correspondre aux technologies de type DVB-H, DVB-T, DAB (Digital Audio Broadcasting), la technologie d'origine coréenne DMB (Digital Multimedia Broadcasting), FLO ou toute autre technologie basée sur l'OFDM.

Dans un mode de réalisation de l'invention, les moyens de paramétrage du système permettent un paramétrage spécifique de ces fonctions de poids ou l'utilisation de fonctions pré-programées pour les technologies T-DAB, DVB-T et DVB-H. Ces fonctions sont décrites dans le document de référence "Impact on coverage of intersymbol interference and FFT window positionning" de Roland Brugger et David Hemingway : EBU technical review July 2003.

Le module de calcul (11) dispose de moyens de détermination, pour chaque émetteur radio (4), d'une probabilité de brouillage (P1, P2, P3) attribuée à chaque pixel (301, 302, 303). Ces moyens de détermination permettent de calculer une valeur représentative du ratio signal sur perturbation C/(I+N) pour chaque pixel (301, 302, 303) à partir des signaux estimés associés aux pixels respectifs fournis par les moyens d'estimation. Ladite perturbation est composée des interférences intercellulaires I et du bruit N relatif à la largeur de canal utilisée par les émetteurs (4) de la cellule. Pour un émetteur (4) donné, la probabilité de brouillage (P1, P2, P3) dans le pixel (301, 302, 303) est calculée par lesdits moyens de détermination à partir des calculs du ratio C/(I+N) obtenu dans les pixels (301, 302, 303) respectifs. On comprend que les probabilités de brouillage (P1, P2, P3) respectives dans chaque pixel (301, 302, 303) se déduisent aisément des calculs respectifs dudit ratio dans les pixels de la cellule. Pour cela, des moyens de comparaison du module de calcul (11) utilisent une valeur de ratio minimum stockée dans les moyens de mémorisation (12) afin de déterminer pour chaque pixel (301, 302, 303) si ce ratio minimum n'est pas atteint. De la sorte, les moyens de comparaison permettent l'obtention des probabilités de brouillage (P1, P2, P3) pour un pixel donné (301, 302, 303).

De façon connue en soi, la valeur minimum du ratio C/(I+N) pour obtenir un fonctionnement correct est fonction de la technologie utilisée et des choix de modulation et de codage dans cette technologie :

$$\frac{C}{I+N} = f(technologie, modulation, codage)$$

De façon également connue en soi, le rapport signal à interférence en bordure de couverture d'un émetteur (4) est une fonction du rayon Rc de cellule couverte par un émetteur (4) et de la distance D équivalente au temps de propagation du délai inter symbole formant l'intervalle de garde (GI) :

$$\frac{C}{I} = brouillage(Rc, D)$$

De la même façon, il est connu que le rapport signal à bruit est fonction du rayon de couverture de la cellule Rc :

$$\frac{C}{N} = atténuation(Rc)$$

Pour obtenir le service en un point ou pixel (301, 302, 303) donné, il faut que le rapport C/(I+N) soit supérieur à la valeur minimum de référence supportée par la technologie, c'est-à-dire :

$$\frac{C_{réel}}{N + I_{réel}} \geq \frac{C_{ref}}{N + I_{ref}}$$

avec

$$I_{réel} = C_{réel} / brouillage \ (Rc, D)$$

où brouillage (Rc, D) vaut:

La fonction prob(valeur1;valeur2) est une fonction donnant le niveau

$$\max\left( \frac{\sum_{cellule\_brouilleuse} prob(atténuation(D);50\%); \quad \sum_{3\,plus\_forte\_brouilleuse} prob(atténuation(D);10\%))}{prob(atténuation(Rc); prob\_service)} \right.$$

de champ atteint avec une probabilité supérieure à valeur2 pour une valeur moyenne égale à valeur1. La valeur prob_ service est paramétrée par l'utilisateur en fonction de la qualité de service souhaitée pour la technologie envisagée.

En référence à la figure 1, le système (1) selon l'invention permet de calculer les données représentant les chiffres de la population située dans des zones (Br) de brouillage nuisible, par l'intermédiaire de moyens d'association prévus pour déterminer, pour chaque émetteur (4), un critère représentatif de la population totale située dans des zones (Br) de brouillage nuisible. Ce critère est déterminé par association de la probabilité de brouillage (P1, P2, P3) en chaque pixel (301, 302, 303) avec les données de démographie en correspondance avec le découpage du réseau (N). Le fait d'appliquer la probabilité de brouillage sur le pixel (301, 302, 303) sur la population résidant dans ce pixel permet ainsi de calculer la population brouillée sur ce pixel (301, 302, 303). On comprend que la population totale brouillée est alors la somme sur la surface utile correspondant à la couverture du réseau (N) de la population brouillée sur chaque pixel (301, 302, 303).

Le module de calcul (11) détermine la combinaison de retards à utiliser par les moyens de contrôle en utilisant des moyens de comparaison du module de calcul (11) servant à déterminer, parmi une pluralité de sommes des critères calculées par intégration sur l'ensemble des émetteurs (4) et correspondant respectivement aux différentes combinaisons de retards, une somme minimale. Autrement dit, l'ajustement des instants relatifs d'émission des différents émetteurs (4) est réalisé par le module de calcul (11) de manière spécifique pour atteindre un minimum de la somme des critères. Les moyens de comparaison du module de calcul (11) permettent de déterminer ce minimum en effectuant des comparaisons entre plusieurs solutions distinctes d'ajustement des retards d'émission au sein du réseau (N). Chaque somme correspondant à une des solutions est mémorisée par exemple dans les moyens de mémorisation (12) du système (1).

Au cours des variations de retard d'émission effectuées par les moyens d'ajustement des retards, dans la limite des bornes inférieures et supérieures de décalage temporelle paramétrées par l'utilisateur (par rapport au moment de référence prévu au départ), le module de calcul (11) stocke des données représentatives de la qualité des combinaisons de retards. Dans un mode de réalisation préféré de l'invention, l'optimisation des retards se fait notamment par exploitation d'un algorithme d'optimisation de type "recuit" simulé, par le module de calcul (11). Cet algorithme est stocké dans une mémoire de travail du module de calcul (11), une base de données ou tout autre moyen de stockage relié au module de calcul (11). Une fonction de convergence prévue avec cet algorithme est par exemple de la forme :

$$\text{Coût}([t]) = \sum_{Tx_i} \sum_{Tx_j \neq Tx_i} \text{contraintes}(Tx_i, Tx_j, t_i-t_j)$$

où [t] est une combinaison [t] de retards appliqués respectivement à chaque émission Txi, et $\Sigma$ contraintes(Txi, Txj, ti-tj) est la population brouillée par l'émission Txi $Tx_j \neq Tx_i$ lorsque l'émetteur indicé $Tx_j$ est retardé de ti-tj par rapport à l'émetteur indicé $Tx_i$.

La fonction de coût mise en oeuvre consiste ainsi, pour un ensemble de retards d'émission [t] des différents émetteurs (4) en la somme des populations brouillées pour chaque couple de cellules compte tenu de la différence de leurs retards d'émission respectifs. Deux paramètres tels qu'un seuil d'acceptation Xa et un nombre d'itérations Xi peuvent être fixés par l'utilisateur pour que ladite optimisation soit effectuée jusqu'à ce que la variation de la fonction ou critère de convergence Coût([t]) au cours de Xi itérations amène celle-ci à un niveau inférieur au seuil Xa. Alternativement, il ne peut être prévu aucun seuil et la combinaison [t] de retards retenue est celle qui permet l'obtention du minimum parmi les sommes calculées. La convergence est stoppée dès que le nombre Xi d'itérations paramétré par l'utilisateur est atteint. Naturellement l'algorithme de type "recuit" simulé peut aussi être remplacé par une méthode de liste tabou ou toute méthode de convergence itérative dérivée.

Ce mode d'obtention d'une combinaison [t] de retards à appliquer présente l'avantage d'un temps de calcul court. Pour permettre d'optimiser de manière encore plus certaine le réseau (N), le système (1) prévoit par exemple d'utiliser la solution quasi optimale obtenue de la manière susmentionnée et de calculer à partir de cette première solution des cartes de brouillage pour toutes les modifications possibles du retard d'un unique émetteur. Cette première solution optimale peut être mise en oeuvre sans nécessiter un nouveau calcul des chiffres de la population située dans des zones (Br) de brouillage nuisible. En effet, l'ajustement des retards peut être réitéré sous le contrôle des moyens d'itérations, directement après le calcul de la fonction de convergence. Le nombre d'itérations associé à la boucle "ajustement des retards - calcul convergence" peut ainsi être paramétré et une solution quasi optimale pour la combinaison des retards peut être mémorisée.

En référence à la figure 4, le procédé de planification automatique de retards des temps d'émission comprend une étape (500) de traitement des données relatives au réseau (N), dans laquelle le module de calcul (11) détermine des données relatives à la population située dans des zones (Br) de brouillage nuisible puis des retards d'émission sont utilisés pour déclencher l'émission des émetteurs radio (4) à des instants décalés lors d'une étape (54) d'ajustement. Cette étape (54) d'ajustement peut être suivie d'une réitération de l'étape (500) de traitement pour estimer à nouveau des chiffres de population située dans des zones de brouillage nuisible. Un nombre d'itérations peut être paramétré pour cela à l'aide de moyens de configuration (13) du système (1). L'étape (54) d'ajustement utilise par exemple des valeurs réparties avec un pas compris entre 1 $\mu$s et 45 $\mu$s dans une gamme de valeurs dont l'amplitude reste inférieure à 500 $\mu$s. Le pas peut aussi être supérieur à 5 $\mu$s pour permettre d'accélérer les calculs. Pour obtenir une optimisation fine, cette étape (54) peut apporter des modifications unitaires d'une valeur de retard pour un émetteur (4) et permettre de choisir la valeur de changement apportant la plus forte amélioration. L'étape (54) d'ajustement prévoit aussi une mémorisation pour chaque émetteur radio (4) du retard utilisé.

Dans un mode de réalisation de l'invention, l'étape d'ajustement comprend une étape (541) de sélection d'un ajustement des retards suivie d'une étape (542) de calcul de convergence. L'étape (542) de calcul de convergence prévoit un calcul d'un critère représentatif de la population totale située dans des zones (Br) de brouillage nuisible. L'étape (54) d'ajustement des retards peut donc comprendre une pluralité de calculs de ce critère et s'achève lorsque le nombre d'itérations a été atteint. Pour limiter le temps de calcul, on comprend que le nombre d'itérations pour recommencer l'étape (541) de sélection d'un ajustement des retards et l'étape (542) de calcul de convergence peut être plus élevé que le nombre d'itérations prévu pour recommencer l'étape (500) de traitement.

L'étape (54) d'ajustement est finalisée à l'issue des itérations en utilisant la combinaison mémorisée de retards utilisés pour chaque émetteur de l'ensemble des émetteurs (4) qui permet d'atteindre un minimum pour lesdits chiffres de population estimés dans les zones (Br) de brouillage nuisible.

Dans l'exemple non limitatif de la figure 4, l'étape de traitement (500) comporte :

- pour chaque émetteur radio (4), une étape (50) de détermination d'une couverture radio du réseau (N) ;
- pour chaque pixel (301, 302, 303) du réseau (N), une étape (51) d'estimation des différentes composantes du signal reçu avec leurs caractéristiques respectives en amplitude et en décalage temporel ;
- pour chaque pixel (301, 302, 303) du réseau (N), une étape (52) de calcul de probabilité de brouillage (P1, P2, P3) ; et
- une étape (53) de détermination d'un critère représentatif de la population totale située dans des zones de brouillage nuisible.

L'étape (50) de détermination de couverture radio comprend un traitement par le module de calcul (11) des données (3) de carte géographique comportant la position des émetteurs radio (4), des données (31) spécifiant un niveau d'émission d'émetteurs et un niveau de seuil de sensibilité de réception radio de terminaux de la cellule (1) et des données (32) représentatives d'une loi d'atténuation de propagation radio, pour générer des données représentatives de cartes (CN) de couverture du réseau (N) qui spécifient, pour chacun des émetteurs (4), des niveaux de champ des signaux reçus en chacun des pixels (301, 302, 303). L'étape (50) de détermination de couverture radio est suivie de l'étape (51) d'estimation d'un poids utile et d'un poids d'interférences pour chacun des signaux reçus.

En référence à la figure 4, il s'ensuit une étape (52) de calcul de probabilité de brouillage (P1, P2, P3) qui prévoit le calcul d'une valeur représentative du ratio signal sur perturbation par le module de calcul (11) pour chaque pixel (301, 302, 303) à partir des signaux estimés associés aux pixels respectifs. La probabilité (P1, P2, P3) de brouillage dans le pixel est déduite des calculs dudit ratio dans les pixels par le module de calcul (11). A partir de ces probabilités de brouillage (P1, P2, P3) en chaque pixel, et des données de démographie en correspondance avec le découpage du réseau (N), l'étape (53) suivante permet d'obtenir le critère servant à évaluer les chiffres de population mal desservie par le réseau (N).

Dans un mode de réalisation de l'invention, il est possible de décomposer le processus de planification de retards en deux parties : une première partie servant pour obtenir rapidement une solution quasi optimale, et une seconde partie prévue pour corriger les défauts résiduels inhérents à la première partie du processus. En référence à la figure 8, le procédé selon l'invention peut ainsi comporter une étape (600) d'initialisation des paramètres du réseau (N), et notamment d'un moment de référence prévu initialement pour l'émission des trames de données par les émetteurs (4). Le procédé comprend pour commencer une étape (50') de calcul de la couverture radio de chaque émetteur (4) qui est analogue à l'étape (50) illustrée à la figure 4. Des matrices des niveaux de réception dans les pixels (301 ; 302 ; 303) peuvent être ainsi obtenues et des cartes numériques (CN) stockées dans les moyens de mémorisation (12).

Dans le mode de réalisation de la figure 8, une étape (E1) de calcul de contraintes de brouillage est effectuée à l'aide du module de calcul (11). Ce calcul débute par l'étape (51') d'estimation d'un signal utile et d'un signal d'interférences dans laquelle la puissance utile reçue et la puissance brouilleuse sont calculées en chaque point ou pixel (301, 302, 303). La figure 5 permet d'illustrer l'obtention des composantes (C1, C2, ..Ci, .., Cn) des signaux. La première partie du processus de planification peut avantageusement servir à estimer les contraintes entre chaque paire de cellules uniquement sur la surface utile qui est la zone où l'une ou l'autre des cellules, prises dans l'ensemble du réseau (N), est reçue avec un champ supérieur ou égal au rapport C/N minimum associé à la technologie d'émission et à la modulation et codage sélectionnés. Ces contraintes entre chaque paire de cellules sont calculées pour toutes les valeurs de différence de retard d'émission, formant ainsi un coefficient unique résumant le poids des interférences entre deux cellules pour une différence de temps d'émission donnée.

Le rapport C/N est par exemple un rapport corrigé d'une marge paramétrable par l'utilisateur pour tenir compte de spécificités de certaines zones du réseau (pour tenir compte d'une demande de qualité plus exigeante.). Ainsi, sur la zone utile, il est simplement effectué un calcul en chaque pixel (301, 302, 303) de la composante utile et brouilleuse de chacun des deux signaux reçus à l'aide d'une fonction de pondération, en prenant par exemple comme origine de temps le signal le plus fort parmi les deux signaux.

Le système (1) permet en effet le paramétrage spécifique de fonctions de poids ou l'utilisation de fonctions de poids préprogrammées pour les technologies d'émission, par exemple T-DAB et DVB-T/H.

Lorsque les émissions sont réalisées suivant la norme T-DAB, le coefficient de pondération paramétrable est par exemple de la forme :

$$
Wi = \begin{cases}
0 & \text{si } t \le -Tu \\
(Tu+t)^2 / Tu^2 & \text{si } -Tu < t \le 0 \\
1 & \text{si } 0 < t \le \Delta \\
(Tu+\Delta - t)^2 / Tu^2 & \text{si } \Delta < t \le Tu + \Delta \\
0 & \text{si } t > Tu + \Delta
\end{cases}
$$

avec
$Wi$ représentant le coefficient de pondération du i-ème signal ;
$Tu$ représentant la période utile d'un symbole ;
$\Delta$ représentant le délai inter-symbole ; et
$t$ représentant l'instant d'arrivée du signal comparativement à un moment de référence.

Lorsque les émissions sont réalisées suivant la norme T-DVB-H, le coefficient de pondération paramétrable est par exemple de la forme :

$$
Wi = \begin{cases}
0 & \text{si } t \le \Delta - Tp \\
(Tu+t)^2 / Tu^2 & \text{si } \Delta - Tp < t \le 0 \\
1 & \text{si } 0 < t \le \Delta \\
(Tu+\Delta - t)^2 / Tu^2 & \text{si } \Delta < t \le Tp \\
0 & \text{si } t > Tp
\end{cases}
$$

avec
$Wi$ représentant le coefficient de pondération du i-ème signal ;
$Tu$ représentant la période utile d'un symbole ;
$\Delta$ représentant le délai inter-symbole ;
$t$ représentant l'instant d'arrivée du signal comparativement à un moment de référence ; et

Tp représentant l'intervalle de contribution utile du signal.

La décomposition en partie utile et partie brouilleuse tient compte des coefficients Wi. La puissance totale Ct du signal utile et la puissance totale brouilleuse It sont respectivement données par les formules suivantes :

$$Ct = \sum_i WiCi$$

$$It = \sum (1-Wi)Ci$$

Dans le cas de la norme T-DAB, la démodulation est différentielle, tandis que dans le cas du DVB-T/H la démodulation est cohérente. On pourra se reporter à la référence susmentionnée "Impact on coverage of intersymbol interference and FFT window positionning" pour trouver des informations supplémentaires particulières relatives aux technologies utilisées dans le but d'estimer la composante utile et la composante brouilleuse des signaux reçus.

Il doit être compris que le positionnement du temps de référence peut être effectué en suivant plusieurs méthodes possibles. A titre d'exemple non limitatif, les méthodes utilisées par les récepteurs OFDM des terminaux mobiles pour synchroniser leur fenêtre de démodulation peuvent être basées sur :

- soit un calage sur le plus fort signal ;
- soit un calage sur le premier signal au-dessus d'un seuil ;
- soit un calage sur le "centre de gravité" (délai pondéré par la puissance de chacun des signaux reçus tels qu'illustrés à la figure 5);
- soit un calage sur la composante du signal permettant de maximiser le rapport C/I.

Le module de calcul (11) du système informatique (1) peut permettre de choisir l'une de ces quatre méthodes, sachant qu'il convient en pratique de paramétrer celle qui correspond à la méthode implémentée majoritairement dans les terminaux mobiles.

Les probabilités de brouillage (P1, P2, P3) sont déterminées pour chaque pixel (301, 302, 303) lors de l'étape (52') de calcul analogue à l'étape (52) déjà décrite précédemment. L'étape (53') fournit ensuite le critère représentatif de la population totale située dans des zones de brouillage nuisible. Dans le mode de réalisation de la figure 8, la sélection de retards paramétrée lors de l'étape (61) de sélection est effectuée en faisant varier le retard d'émission entre les bornes minimales et maximales paramétrées par l'utilisateur. L'étape (62) qui suit met par exemple en oeuvre l'algorithme d'optimisation de type "recuit" simulé du type susmentionné pour établir une convergence vers une combinaison [t] de retards quasi optimale. Dans cette étape, tant que le nombre d'itérations Xi n'est pas atteint, des modifications des retards sont proposées, à l'aide des moyens d'ajustement de retards, lors d'une réitération de l'étape (61) de sélection. L'ajustement tient compte des cas illustrés aux figures 6 et 7, par exemple en conservant certains retards permettant de diminuer/éliminer les zones (Br) de brouillage nuisible et de supprimer certains retards qui ne permettent pas une telle diminution.

La seconde partie du processus de planification de retards permet d'effectuer des ajustements, directement à partir de la combinaison de retards quasi optimale obtenue grâce à la première partie décrite ci-dessus. En référence à la figure 8, une étape (E2) de calcul de cartes de brouillage est effectuée à l'aide du module de calcul (11) en tenant compte de tous les retards possibles. Ce calcul comprend une étape (63) d'extraction de données permettant de fournir d'une part des données représentatives des brouillages résultants des retards programmés sur chaque émetteurs (4) en tenant compte des cartes numériques (CN) et d'autre part, des données de population. A partir de la couverture unitaire des cellules (matrices de niveaux de réception), et en fonction des retards, le module de calcul (11) génère des données représentatives d'une carte de probabilité de brouillage. Cette probabilité de brouillage est la probabilité que le rapport C/(I+N) en un pixel (301, 302, 303) soit inférieur au niveau minimum de fonctionnement du réseau (N) compte tenu de la dispersion du champ dans le pixel (301, 302, 303).

Dans un mode de réalisation de l'invention, une cartographie de population est alors associée aux probabilités de brouillage en chaque pixel (301, 302, 303) pour définir précisément le pourcentage de population victime du brouillage. Ce pourcentage peut être calculé comme suit :

$$Taux\_pop\_brouillée = \frac{\iint\limits_{x,y} pop\_brouillée\ (x,y) \times population\ (x,y)}{\iint\limits_{x,y} population\ (x,y)}$$

où x et y représentent des coordonnées de pixels.

Cette fonction d'évaluation du pourcentage de population victime du brouillage peut être utilisée pour qualifier les solutions potentielles les unes par rapport aux autres. L'étape (E2) de calcul de cartes de brouillage sert ainsi à fournir des informations de référence pour trouver une solution minimisant autant que possible la fonction *Taux_pop_ brouillée.* En référence à la figure 8, le procédé peut se poursuivre avec une étape (641) d'ajustement des retards qui tient compte des informations de référence fournies sous la forme de cartes de brouillage. L'étape (641) permet d'effectuer des changements unitaires d'une valeur de retard pour un émetteur (4) et de choisir le changement apportant le plus fort gain. L'étape (642) qui suit met par exemple en oeuvre l'algorithme d'optimisation de type "recuit" simulé du type susmentionné pour établir une convergence vers une combinaison [t] de retards complètement optimale. L'étape (642) est suivie d'une réitération de l'étape de calcul de cartes de brouillage pour mettre à jour les informations de référence devant être utilisés dans l'étape suivante (641) d'ajustement de retards, jusqu'à atteindre un nombre d'itérations paramétré. Chaque itération nécessitant des calculs complexes en chaque pixel du réseau (N), en raison du nombre important de sites d'émission et de valeurs des retards, le nombre d'itérations pourra être choisi peu élevé (inférieur à 100 par exemple).

Dans un mode de réalisation de l'invention, le procédé illustré à la figure 8 peut utiliser des valeurs de retards possibles réduites, par exemple en sélectionnant des valeurs multiples de dix ou de vingt microsecondes et non les microsecondes elles-mêmes. Ainsi, la qualité du résultat peut rester bonne tout en réduisant le temps de calcul. Le pas d'incrément des valeurs de retard possible doit quand même rester dans un faible rapport avec l'intervalle de garde, par exemple au moins 5 fois inférieur à cet intervalle de garde (GI).

Naturellement, lorsque les valeurs sont réduites par utilisation d'un incrément de l'ordre de la dizaine de microsecondes, il peut être envisagé de compléter le processus illustré à la figure 8 par au moins un cycle d'itération complémentaire dans la seconde partie, afin d'exploiter toutes les valeurs possibles.

A titre d'exemple, dans la technologie DVB-T ou DVB-H, en mode OFDM de 8K (qui correspond à 6817 sous-porteuses) avec un codage à glissement de phase en quadrature QPSK ¼ (Quadrature Phase Shift Keving d'un quart), l'intervalle de garde (GI) peut être pris égal à 224 μs. Le domaine de variation du retard peut être borné entre 0 et 2 fois la durée de cet intervalle (GI), par un paramétrage de l'utilisateur à l'aide des moyens de configuration (13). L'architecture du réseau (N) est naturellement prise en compte pour paramétrer l'étendue maximale entre les décalages ou retards d'émission. Cela peut représenter près de 450 valeurs lorsque l'incrément entre les valeurs est de 1 μs. Une option prévue dans le procédé de l'invention est de réaliser quelques calculs en utilisant des valeurs en vingtaines de microsecondes pour accélérer la convergence. Une fois la convergence atteinte, il est possible de passer par pas de 5 μs, puis 1 μs pour une optimisation fine.

De façon alternative ou complémentaire, le procédé selon l'invention peut mettre en oeuvre une répartition en mailles de réseau (N) de dimensions plus grandes que les pixels (dimensions supérieures à 1 km * 1 km par exemple). En particulier, la répartition en de telles mailles peut être utilisée pour le calcul de la fonction *Taux_pop_brouillée.* Ainsi, alors que les calculs de couverture sont faits typiquement sur des résolutions de quelques dizaines de mètres, et compte tenu du fait que les sites interféreurs sont situés à quelques dizaines de km les uns des autres (l'intervalle de garde pouvant en effet être suffisamment élevé pour repousser les interférences bien au-delà de 10 km), les calculs d'interférences peuvent être réalisés sur une base de quelques km$^2$.

Pour cela, il suffit de sous-échantillonner les cartes de couverture (CN) de chaque site d'émission avec une résolution souhaitée, tout en conservant la valeur minimale et la valeur maximale des puissances des signaux reçus. La valeur minimale servira en effet à l'évaluation du champ utile C, tandis que la valeur maximale servira à l'évaluation du champ brouilleur. A titre d'exemple, le passage d'une résolution de 50 mètres (dimension d'un pixel) à un calcul sur 2 km permet d'accélérer le calcul d'une itération dans la seconde partie du processus dans un rapport 1600. Il est bien entendu que le choix de cette résolution de calcul est également limité par la durée de l'intervalle de garde (GI) qui doit rester grande devant la taille de la maille de surface, soit un rapport 10 au minimum. Là encore, il st possible de compléter une optimisation effectuée à basse résolution par quelques itérations en haute résolution, avec un calcul de la fonction d'évaluation *Taux_pop_brouillée* élaboré en considérant les pixels (301, 302, 303) élémentaires.

Un des avantages de l'invention est de permettre un gain de qualité de couverture et un gain de temps en ingénierie d'un réseau (N) radio utilisant seulement une fréquence pour délivrer un service de télédiffusion numérique à destination de terminaux mobiles cellulaires.

Il doit être évident pour les personnes versées dans l'art que la présente invention permet des modes de réalisation sous de nombreuses autres formes spécifiques sans l'éloigner du domaine d'application de l'invention comme revendiqué. Par conséquent, les présents modes de réalisation doivent être considérés à titre d'illustration, mais peuvent être modifiés dans le domaine défini par la portée des revendications jointes et l'invention ne doit pas être limitée aux détails donnés ci-dessus.

**Revendications**

1. Procédé de planification automatique de retards des temps d'émission de différents émetteurs radio (4) générant avec une même fréquence des cellules radio pour former un réseau (N) radio de télédiffusion numérique synchrone en temps et en fréquence, mis en oeuvre par l'intermédiaire d'un système informatique (1) comprenant des moyens de mémorisation (12) pour stocker des données relatives au réseau (N) incluant des données (3) représentatives de zones géographiques découpées en une pluralité de points ou pixels (301, 302, 303) selon le découpage dudit réseau (N) et comportant la position des émetteurs radio (4), des données de démographie en correspondance avec le découpage du réseau, des données (31) spécifiant un niveau d'émission d'émetteurs et un niveau de seuil de sensibilité de réception radio de terminaux de la cellule (1), des données (32) représentatives d'une loi d'atténuation de propagation radio et des données représentatives d'une durée des intervalles de garde (GI) prévus entre des trames de données, le système (1) comprenant en outre un module de calcul (11) et des moyens de paramétrage d'une pluralité d'émetteurs radio (4), le procédé comprenant pour chaque émetteur radio (4) une étape de déclenchement d'une émission à un instant déterminé, **caractérisé en ce qu'**il comporte une étape (500) de traitement des données relatives au réseau (N) utilisant le module de calcul (11) pour calculer des données représentant des chiffres de population située dans des zones (Br) de brouillage nuisible et une étape (54) d'ajustement de ladite étape de déclenchement effectuée pour chaque émetteur radio (4) en utilisant un retard d'émission variant entre 0 et une valeur non nulle inférieure à 1 ms avec mémorisation pour chaque émetteur radio (4) du retard utilisé, l'étape (54) d'ajustement étant suivie d'une réitération de l'étape (500) de traitement pour estimer à nouveau des chiffres de population située dans des zones de brouillage nuisible, l'étape (500) de traitement étant réitérée avec un nombre d'itérations paramétré à l'aide de moyens de configuration (13) du système (1), l'étape d'ajustement étant finalisée à l'issue des itérations en utilisant une combinaison mémorisée de retards utilisés pour chaque émetteur de l'ensemble des émetteurs (4) qui permet d'atteindre un minimum pour lesdits chiffres de population estimés dans des zones (Br) de brouillage nuisible.

2. Procédé selon la revendication 1, **caractérisé en ce que** l'étape (500) de traitement des données relatives au réseau (N) comprend :

   - une étape (50) de détermination d'une couverture radio du réseau (N), incluant un traitement par le module de calcul (11) des données (3) de carte géographique comportant la position des émetteurs radio (4), des données (31) spécifiant un niveau d'émission d'émetteurs et un niveau de seuil de sensibilité de réception radio de terminaux de la cellule (1) et des données (32) représentatives d'une loi d'atténuation de propagation radio, pour générer des données représentatives de cartes (CN) de couverture du réseau (N) qui spécifient, pour chacun des émetteurs (4), des niveaux de champ des signaux reçus en chacun des pixels (301, 302, 303) ;
   - pour chaque émetteur radio (4), une étape (51) d'estimation d'un signal utile et d'un signal d'interférences dans des pixels du réseau (N), à l'aide d'une décomposition par le module de calcul (11) des niveaux de champ des signaux reçus via le réseau (N) en une composante utile et une composante brouilleuse, le module de calcul (11) utilisant une fonction de pondération paramétrable pour réaliser ladite décomposition.

3. Procédé selon la revendication 2, dans lequel l'étape (500) de traitement des données relatives au réseau (N) comprend, pour chaque émetteur radio (4):

   - une étape (52) de calcul d'une probabilité de brouillage (P1, P2, P3) pour chaque pixel (301, 302, 303), dans laquelle une valeur représentative du ratio signal sur perturbation est d'abord calculée par le module de calcul (11) pour chaque pixel (301, 302, 303) à partir des signaux estimés associés aux pixels respectifs, ladite perturbation étant composée des interférences intercellulaires et du bruit relatif à la largeur de canal utilisée par les émetteurs (4) de la cellule, puis la probabilité (P1, P2, P3) de brouillage dans le pixel est déduite des calculs dudit ratio dans les pixels par le module de calcul (11) ; et
   - une étape (53) de détermination d'un critère représentatif de la population totale située dans des zones de brouillage nuisible, ledit critère étant déterminé par le module de calcul (11) à partir des probabilités de brouillage (P1, P2, P3) en chaque pixel et des données de démographie en correspondance avec le découpage du réseau.

**4.** Procédé selon la revendication 3, dans lequel l'étape (54) d'ajustement de ladite étape de déclenchement est réalisée de façon déterminée par le module de calcul (11) pour atteindre un minimum de la somme desdits critères calculée par intégration sur l'ensemble des émetteurs (4), ledit minimum résultant notamment d'au moins une comparaison par des moyens de comparaison du module de calcul (11) entre plusieurs solutions distinctes d'ajustement des retards d'émission au sein du réseau (N).

**5.** Procédé selon la revendication 3 ou 4, dans lequel la probabilité de brouillage (P1, P2, P3) dans chaque pixel (301, 302, 303) est déduite des calculs dudit ratio dans les pixels de la cellule par des moyens de comparaison du module de calcul (11), une valeur de ratio minimum étant stockée dans les moyens de mémorisation (12) et utilisée par les moyens de comparaison pour déterminer pour chaque pixel si le ratio minimum n'est pas atteint et permettre ainsi l'obtention de la probabilité de brouillage (P1, P2, P3) pour le pixel (301, 302, 303).

**6.** Procédé selon une des revendications 2 à 5, dans lequel les émissions sont réalisées suivant la norme T-DAB, le coefficient de pondération paramétrable étant de la forme :

$$Wi = \begin{cases} 0 & \text{si } t \le -Tu \\ (Tu+t)^2 / Tu^2 & \text{si } -Tu < t \le 0 \\ 1 & \text{si } 0 < t \le \Delta \\ (Tu+\Delta - t)^2 / Tu^2 & \text{si } \Delta < t \le Tu+ \Delta \\ 0 & \text{si } t > Tu+ \Delta \end{cases}$$

avec
Wi représentant le coefficient de pondération du i-ème signal ;
Tu représentant la période utile d'un symbole ;
$\Delta$ représentant le délai inter-symbole ; et
t représentant l'instant d'arrivée du signal comparativement à un moment de référence.

**7.** Procédé selon une des revendications 2 à 5, dans lequel les émissions sont réalisées suivant la norme DVB, le coefficient de pondération paramétrable étant de la forme :

$$Wi = \begin{cases} 0 & \text{si } t \le \Delta -Tp \\ (Tu+t)^2 / Tu^2 & \text{si } \Delta -Tp < t \le 0 \\ 1 & \text{si } 0 < t \le \Delta \\ (Tu+\Delta - t)^2 / Tu^2 & \text{si } \Delta < t \le Tp \\ 0 & \text{si } t > Tp \end{cases}$$

avec
Wi représentant le coefficient de pondération du i-ème signal ;
Tu représentant la période utile d'un symbole ;
$\Delta$ représentant le délai inter-symbole ;
t représentant l'instant d'arrivée du signal comparativement à un moment de référence ; et
Tp représentant l'intervalle de contribution utile du signal.

**8.** Procédé selon une des revendications 1 à 7, dans lequel l'étape (54) d'ajustement utilise des valeurs réparties avec un pas compris entre 1 µs et 45 µs dans une gamme de valeurs dont l'amplitude reste inférieure à 500 µs.

**9.** Procédé selon une des revendications 1 à 8, dans lequel l'étape (54) d'ajustement utilise des valeurs réparties avec un pas compris entre 5 µs et 45 µs dans une gamme de valeurs dont l'amplitude reste inférieure à 500 µs.

**10.** Procédé selon une des revendications 1 à 9, dans lequel l'étape de déclenchement d'une émission à un instant déterminé comprend une division d'un signal reçu par l'émetteur (4) en une pluralité de signaux d'émission sur une pluralité de sous-porteuses suivant une modulation numérique de fréquence de type OFDM, des intervalles de garde (GI) ayant une même durée déterminée de transmission étant insérés entre des trames de données constituant des symboles (S) modulés en OFDM, la durée de transmission des intervalles de garde (GI) étant une constante fonction de la durée de transmission d'un symbole (S).

**11.** Procédé selon une des revendications 1 à 10, **caractérisé en ce qu'**il comprend une étape de mémorisation de données de densité de trafic d'utilisateurs d'un réseau de radiotéléphonie à utiliser en remplacement des données de démographie.

**12.** Procédé selon une des revendications 2 à 11, dans lequel l'étape (50) de détermination d'une couverture radio comporte une étape de détermination par le module de calcul (11), pour chaque pixel (301, 302, 303), d'une distance respective entre chaque émetteur (4) et le pixel à considérer, suivie d'une étape de correction par le module de calcul (11) de cette distance par prise en compte du retard paramétré pour les émetteurs (4) respectifs à l'aide des moyens d'ajustement des retards.

**13.** Système (1) de planification automatique de retards des temps d'émission de différents émetteurs radio (4) générant avec une même fréquence des cellules radio pour former un réseau (N) radio de télédiffusion numérique synchrone en temps et en fréquence, comprenant des moyens de mémorisation (12) pour stocker des données relatives au réseau (N) incluant des données (3) représentatives de zones géographiques découpées en une pluralité de points ou pixels (301, 302, 303) selon le découpage dudit réseau (N) et comportant la position des émetteurs radio (4), des données de démographie en correspondance avec le découpage du réseau, des données (31) spécifiant un niveau d'émission d'émetteurs et un niveau de seuil de sensibilité de réception radio de terminaux de la cellule (1), des données (32) représentatives d'une loi d'atténuation de propagation radio et des données représentatives d'une durée des intervalles de garde (GI) prévus entre des trames de données, le système (1) comprenant en outre un module de calcul (11) et des moyens de paramétrage d'une pluralité d'émetteurs radio (4), **caractérisé en ce qu'**il comprend des moyens de déclenchement d'une émission à un instant déterminé pour chaque émetteur radio (4), le module de calcul (11) étant agencé pour calculer, par un traitement des données relatives au réseau (N), des données représentant des chiffres de la population située dans des zones de brouillage nuisible, lesdits moyens de paramétrage étant aptes à utiliser des retards qui sont stockés dans les moyens de mémorisation (12), des moyens de contrôle des moyens de déclenchement étant prévus pour retarder l'émission au niveau de chaque émetteur radio (4), avec un retard variant entre 0 et une valeur non nulle inférieure à 1 ms, ledit retard étant mémorisé pour chaque émetteur radio (4), des moyens d'ajustement des retards étant reliés aux moyens de contrôle pour fournir différentes combinaisons de retards pour l'ensemble des émetteurs (4), le module de calcul (11) étant doté de moyens d'itérations permettant de faire calculer à nouveau des chiffres de la population située dans des zones de brouillage nuisible pour des combinaisons distinctes de retards, des moyens de configuration (13) du système (1) étant en liaison avec le module de calcul (11) pour fournir un nombre d'itérations permettant de désactiver les moyens d'itérations, lesdits moyens de contrôle étant aptes à utiliser, parmi les combinaisons fournies par les moyens d'ajustement de retards, une combinaison de retards pour l'ensemble des émetteurs (4) qui correspond à l'obtention par le module de calcul (11) d'un minimum pour lesdits chiffres de population estimés.

**14.** Système (1) selon la revendication 13, dans lequel le module de calcul (11) dispose, pour calculer les données représentant des chiffres de la population située dans des zones (Br) de brouillage nuisible :

    - de moyens pour déterminer une couverture radio du réseau (N), aptes à traiter les données (3) de carte géographique comportant la position des émetteurs radio (4), les données (31) spécifiant un niveau d'émission d'émetteurs et un niveau de seuil de sensibilité de réception radio de terminaux de la cellule (1) et les données (32) représentatives d'une loi d'atténuation de propagation radio, pour générer des données représentatives de cartes (CN) de couverture du réseau (N) qui spécifient, pour chacun des émetteurs (4), des niveaux de champ des signaux reçus en chacun des pixels (301, 302, 303) ;
    - des moyens d'estimation pour chaque émetteur radio (4), d'un signal utile et d'un signal d'interférences dans des pixels du réseau (N), ces moyens d'estimation étant aptes à décomposer des niveaux de champ des signaux reçus via le réseau (N) en une composante utile et une composante brouilleuse, et à utiliser une fonction de pondération paramétrée à l'aide des moyens de configuration (13) pour réaliser ladite décomposition ;

- des moyens de détermination, pour chaque émetteur radio (4), d'une probabilité de brouillage (P1, P2, P3) pour chaque pixel (301, 302, 303), agencés pour calculer une valeur représentative du ratio signal sur perturbation pour chaque pixel (301, 302, 303) à partir des signaux estimés associés aux pixels respectifs fournis par les moyens d'estimation, ladite perturbation étant composée des interférences intercellulaires et du bruit relatif à la largeur de canal utilisée par les émetteurs (4) de la cellule, lesdits moyens de détermination calculant la probabilité de brouillage (P1, P2, P3) dans le pixel à partir des calculs dudit ratio dans les pixels ;

- des moyens d'association permettant, pour chaque émetteur (4), de déterminer un critère représentatif de la population totale située dans des zones (Br) de brouillage nuisible, ledit critère étant déterminé par association de la probabilité de brouillage (P1, P2, P3) en chaque pixel (301, 302, 303) et des données de démographie en correspondance avec le découpage du réseau (N).

**15.** Système (1) selon la revendication 14, dans lequel le module de calcul (11) détermine la combinaison de retards à utiliser par les moyens de contrôle en utilisant des moyens de comparaison du module de calcul (11) prévus pour déterminer, parmi une pluralité de sommes des critères, correspondant respectivement aux différentes combinaisons de retards, un minimum de la somme desdits critères calculée par intégration sur l'ensemble des émetteurs (4).

**16.** Système (1) selon la revendication 14 ou 15, dans lequel la probabilité de brouillage (P1, P2, P3) dans chaque pixel (301, 302, 303) est déduite des calculs dudit ratio dans les pixels de la cellule par des moyens de comparaison du module de calcul (11), une valeur de ratio minimum étant stockée dans les moyens de mémorisation (12) et utilisée par les moyens de comparaison pour déterminer pour chaque pixel si le ratio minimum n'est pas atteint et permettre ainsi l'obtention de la probabilité de brouillage pour le pixel (301, 302, 303).

**17.** Réseau pour la diffusion de radiocommunications contenant au moins un programme TV ou radio, **caractérisé en ce qu'**il consiste en un réseau de radiotéléphonie comprenant une pluralité de sites émetteurs formant des cellules radio (20) respectives définissant ensemble une couverture radio, et **en ce que** tous ces sites sont équipés d'émetteurs (4) pour la diffusion de TV ou de radio et qu'ils sont tous paramétrés avec une même fréquence UHF pour générer une cellule radio, les émetteurs (4) étant agencés pour envoyer des trames constituant un symbole (S) modulé en OFDM avec un intervalle de garde (GI) correspondant à une fraction comprise entre un quart et un seizième de la durée de transmission d'une trame, les émetteurs (4) étant agencés pour déclencher leur émission respective avec un décalage ou retard déterminé variant entre 0 et une valeur non nulle inférieure à 1 ms et ne dépassant pas le double de la durée de l'intervalle de garde (GI), ledit réseau utilisant une combinaison de retards adaptée pour minimiser le nombre de zones (Br) de brouillage nuisible coïncidant avec des zones peuplées.

**Claims**

**1.** Method for automatically planning delays in the transmission times of various radio transmitters (4) generating, with the same frequency, radio cells so as to form a digital radio broadcasting network (N) synchronous in time and frequency, implemented via a computer system (1) comprising memory means (12) for storing data relating to the network (N) including data (3) representing geographical areas segmented into a plurality of dots or pixels (301, 302, 303) according to the segmentation of said network (N) and including the position of the radio transmitters (4), demographic data corresponding to the segmentation of the network, data (31) specifying a transmitter transmission level and a threshold level of radio reception sensitivity of terminals in the cell (1), data (32) representing a radio propagation attenuation law and data representing a duration of the guard intervals (GI) provided between data frames, the system (1) further comprising a calculation module (11) and means for parameterising a plurality of radio transmitters (4), the method comprising, for each radio transmitter (4), a step of triggering a transmission at a given moment, **characterised in that** it includes a step (500) of processing the data relating to the network (N) using the calculation module (11) to calculate data representing figures for population located in harmful interference zones (Br) and a step (54) of adjusting said triggering step carried out for each radio transmitter (4) by using a transmission delay varying between 0 and a non-zero value less than 1 ms while storing the delay used for each radio transmitter (4), the adjustment step (54) being followed by a reiteration of the processing step (500) in order to estimate once again figures for population located in harmful interference zones, the processing step (500) being reiterated with a number of iterations parameterised by means (13) for configuring the system (1), the adjustment step being finalised at the end of the iterations by using a stored combination of delays used for each transmitter of the set of transmitters (4), which makes it possible to reach a minimum for said estimated figures for population in harmful interference zones (Br).

2. Method according to Claim 1, **characterised in that** the step (500) of processing data relating to the network (N) comprises:

- a step (50) of determining radio coverage of the network (N), including processing by the calculation module (11) of the geographical map data (3) including the position of the radio transmitters (4), the data (31) specifying a transmitter transmission level and a sensitivity threshold level of radio reception of terminals of the cell (1) and the data (32) representing a radio propagation attenuation law, in order to generate data representing coverage maps (CN) of the network (N), which specify, for each of the transmitters (4), signal field levels received at each of the pixels (301, 302, 303);
- for each radio transmitter (4), a step (51) of estimating a wanted signal and an interference signal in pixels of the network (N), using decomposition by the calculation module (11) of the signal levels received via the network (N) into a wanted component and an interfering component, the calculation module (11) using a parameterisable weighting function to carry out said decomposition.

3. Method according to Claim 2, in which the step (500) of processing data relating to the network (N) comprises, for each radio transmitter (4):

- a step (52) of calculating an interference probability (P1, P2, P3) for each pixel (301, 302, 303), in which a value representing the signal to disturbance ratio is calculated first by the calculation module (11) for each pixel (301, 302, 303) on the basis of the estimated signals associated with the respective pixels, said disturbance being composed of the intercellular interference and the noise relating to the channel width used by the transmitters (4) of the cell, then the probability (P1, P2, P3) of interference in the pixel is deduced from the calculations of said ratio in the pixels by the calculation module (11); and
- a step (53) of determining a criterion representing the total population located in harmful interference zones, said criterion being determined by the calculation module (11) on the basis of the probabilities (P1, P2, P3) of interference in each pixel and the demographic data corresponding to the segmentation of the network.

4. Method according to Claim 3, in which the step (54) of adjusting said triggering step is carried out in a manner determined by the calculation module (11) in order to reach a minimum for the sum of said criteria calculated by integration over the set of transmitters (4), said minimum resulting particularly from at least one comparison by comparison means of the calculation module (11) between several distinct solutions for adjusting the transmission delays within the network (N).

5. Method according to Claim 3 or 4, in which the probability (P1, P2, P3) of interference in each pixel (301, 302, 303) is deduced by the calculations of said ratio in the pixels of the cell by comparison means of the calculation module (11), a minimum ratio value being stored in the memory means (12) and being used by the comparison means to determine, for each pixel, whether the minimum ratio has not been reached and thus to allow the interference probability (P1, P2, P3) for the pixel (301, 302, 303) to be achieved.

6. Method according to one of Claims 2 to 5, in which transmissions are carried out in accordance with the T-DAB standard, the parameterisable weighting coefficient being in the form:

$$
W_i = \begin{cases}
0 & \text{if } t \le -T_u \\
(T_u+t)^2 / T_u^2 & \text{if } -T_u < t \le 0 \\
1 & \text{if } 0 < t \le \Delta \\
(T_u+\Delta - t)^2 / T_u^2 & \text{if } \Delta < t \le T_u + \Delta \\
0 & \text{if } t > T_u + \Delta
\end{cases}
$$

with
$W_i$ representing the weighting coefficient of the i-th signal;
$T_u$ representing the wanted period of a symbol;

$\Delta$ representing the intersymbol time; and

t representing the moment of arrival of the signal compared with a reference moment.

7. Method according to one of Claims 2 to 5, in which the transmissions are carried out in accordance with the DVB standard, the parameterisable weighting coefficient being in the form:

$$Wi = \begin{cases} 0 & \text{if } t \leq \Delta - Tp \\ (Tu+t)^2 / Tu^2 & \text{if } \Delta - Tu < t \leq 0 \\ 1 & \text{if } 0 < t \leq \Delta \\ (Tu+\Delta - t)^2 / Tu^2 & \text{if } \Delta < t \leq Tp \\ 0 & \text{if } t > Tp \end{cases}$$

with

Wi representing the weighting coefficient of the i-th signal;

Tu representing the wanted period of a symbol;

$\Delta$ representing the intersymbol time;

t representing the moment of arrival of the signal compared with a reference moment; and

Tp representing the wanted contribution interval of the signal.

8. Method according to one of Claims 1 to 7, in which the adjustment step (54) uses values distributed at a spacing comprised between 1 $\mu$s and 45 $\mu$s within a range of values, the amplitude of which remains below 500 $\mu$s.

9. Method according to one of Claims 1 to 8, in which the adjustment step (54) uses values distributed at a spacing comprised between 5 $\mu$s and 45 $\mu$s within a range of values, the amplitude of which remains below 500 $\mu$s.

10. Method according to one of Claims 1 to 9, in which the step of triggering a transmission at a given moment comprises division of a signal received by the transmitter (4) into a plurality of transmission signals over a plurality of subcarriers using OFDM-type digital frequency modulation, guard intervals (GI) with the same given transmission time being inserted between data frames constituting OFDM-modulated symbols (S), the transmission time of the guard intervals (GI) being a constant that is a function of the transmission time of a symbol (S).

11. Method according to one of Claims 1 to 10, **characterised in that** it comprises a step of storing user traffic density data of a wireless telephony network to be used as a replacement for demographic data.

12. Method according to one of Claims 2 to 11, in which the step (50) of determining radio coverage includes a step in which the calculation module (11) determines, for each pixel (301, 302, 303), a respective distance between each transmitter (4) and the pixel to be considered, followed by a step in which the calculation module (11) corrects this distance by taking account of the delay parameterised for the respective transmitters (4) using the delay adjustment means.

13. System (1) for automatically planning delays in the transmission times of various radio transmitters (4) generating, with the same frequency, radio cells so as to form a digital radio broadcasting network (N) synchronous in time and frequency, comprising memory means (12) for storing data relating to the network (N) including data (3) representing geographical areas segmented into a plurality of dots or pixels (301, 302, 303) according to the segmentation of said network (N) and including the position of the radio transmitters (4), demographic data corresponding to the segmentation of the network, data (31) specifying a transmitter transmission level and a threshold level of radio reception sensitivity of terminals in the cell (1), data (32) representing a radio propagation attenuation law and data representing a duration of the guard intervals (GI) provided between data frames, the system (1) further comprising a calculation module (11) and means for parameterising a plurality of radio transmitters (4), **characterised in that** it comprises means for triggering a transmission at a given moment for each radio transmitter (4), the calculation module (11) being arranged so as to calculate, by processing data relating to the network (N), data representing figures for population located in harmful interference zones, said parameterisation means being capable of using delays that are stored in the memory means (12), means for controlling the triggering means being provided so as to delay the transmission from each radio transmitter (4), with a delay varying between 0 and a non-zero value less than 1 ms, said delay being stored for each radio transmitter (4), delay adjustment means being connected to the control means in order to provide different combinations of delays for the set of transmitters (4), the calculation module (11) being equipped with iteration means making it possible to calculate once again figures for population located in harmful interference zones for distinct combinations of delays, means (13) for configuring the system (1) being linked to the calculation module (11) in order to provide a number of iterations making it possible to deactivate the iteration means, said control means being capable of using, among the combinations provided by the delay adjustment means, a combination of delays for the set of transmitters (4) that corresponds to the calculation module (11) obtaining a minimum for said estimated population figures.

14. System (1) according to Claim 13, in which the calculation module (11) has at its disposal, for calculating the data representing figures for population located in harmful interference zones (Br):

- means for determining radio coverage of the network (N), capable of processing the geographical map data (3) including the position of the radio transmitters (4), the data (31) specifying a transmitter transmission level and a sensitivity threshold level of radio reception of terminals of the cell (1) and the data (32) representing a radio propagation attenuation law, in order to generate data representing coverage maps (CN) of the network (N), which specify, for each of the transmitters (4), signal field levels received at each of the pixels (301, 302, 303);
- for each radio transmitter (4), means for estimating a wanted signal and an interference signal in pixels of the network (N), these estimation means being capable of decomposing signal field levels received via the network (N) into a wanted component and an interfering component, and of using a parameterised weighting function using the configuration means (13) to carry out said decomposition;
- means for determining, for each radio transmitter (4), an interference probability (P1, P2, P3) for each pixel (301, 302, 303), arranged so as to calculate a value representing the signal to disturbance ratio for each pixel (301, 302, 303) on the basis of the estimated signals associated with the respective pixels provided by the estimation means, said disturbance being composed of the intercellular interference and the noise relating to the channel width used by the transmitters (4) of the cell, said determination means calculating the probability (P1, P2, P3) of interference in the pixel on the basis of the calculations of said ratio in the pixels;
- association means making it possible, for each transmitter (4), to determine a criterion representing the total population located in harmful interference areas (Br), said criterion being determined by associating the probability (P1, P2, P3) of interference in each pixel (301, 302, 303) and the demographic data corresponding to the segmentation of the network (N).

15. System (1) according to Claim 14, in which the calculation module (11) determines the combination of delays to be used by the control means, using comparison means of the calculation module (11) provided in order to determine, among a plurality of sums of the criteria, corresponding respectively to the different combinations of delays, a minimum for the sum of said calculated criteria by integration over the set of transmitters (4).

16. System (1) according to Claim 14 or 15, in which the probability (P1, P2, P3) of interference in each pixel (301, 302, 303) is deduced from the calculations of said ratio in the pixels of the cell by comparison means of the calculation module (11), a minimum ratio value being stored in the memory means (12) and used by the comparison means to determine, for each pixel, whether the minimum ratio has not been reached and thus to allow the interference probability for the pixel (301, 302, 303) to be obtained.

17. Network for the broadcasting of radiocommunications containing at least one TV or radio programme, **characterised in that** it consists of a wireless telephony network comprising a plurality of transmitting sites forming respective radio cells (20) together defining radio coverage, and **in that** all these sites are equipped with transmitters (4) for TV or radio broadcasting and that they all are parameterised with the same UHF frequency to generate a radio cell, the transmitters (4) being arranged so as to send frames constituting a symbol (S) modulated in OFDM with a guard interval (GI) corresponding to a fraction comprised between a quarter and a sixteenth of the transmission time of a frame, the transmitters (4) being arranged so as to start their respective transmissions with a given lag or delay varying between 0 and a non-zero value less than 1 ms and not exceeding double the duration of the guard interval (GI), said network using a combination of delays adapted to minimise the number of harmful interference zones (Br) coinciding with populated zones.

**Patentansprüche**

1. Verfahren für die automatischen Planung von Verzögerungen der Sendezeiten verschiedener Funksender (4), die mit einer gleichen Frequenz Funkzellen erzeugen, so dass ein in Zeit und Frequenz synchrones digitales Rundfunkübertragungsnetz (N) gebildet wird, das mittels eines Datenverarbeitungssystems (1) umgesetzt wird, das Speichermittel (12) zum Speichern der auf das Netz (N) bezogenen Daten aufweist, welche für geographische Bereiche repräsentative Daten (3) aufweisen, die gemäß der Aufteilung des Netzes (N) in eine Mehrzahl von Punkten oder Pixeln (301, 302, 303) aufgeteilt sind und die Position der Funksender (4) enthalten, demographische Daten entsprechend der Aufteilung des Netzes, einen Sendepegel von Sendern und einen Empfindlichkeitsschwellenwert für den Funkempfang der Terminals der Zelle (1) spezifizierende Daten (31), für ein Gesetz für die Dämpfung bei der Funkwellenausbreitung repräsentative Daten (32), und für eine Dauer der Schutzintervalle (GI) repräsentative Daten, die zwischen Datenrastern vorgesehen sind, wobei das System (1) ferner ein Berechnungsmodul (11) und Mittel zur Parametrisierung einer Mehrzahl von Funksendern (4) aufweist, wobei das Verfahren für jeden Funksender (4) eine Stufe zur Auslösung einer Emission zu einem bestimmten Zeitpunkt aufweist, **dadurch gekennzeichnet, dass** es eine Stufe (500) zur Verarbeitung der auf das Netz (N) bezogenen Daten aufweist, unter Verwendung des Berechnungsmoduls (11) zum Berechnen der Daten, die Bevölkerungszahlen in schädlichen Störbereichen (Br) darstellen, sowie eine Stufe (54) zum Anpassen der Auslösungsstufe, die für jeden Funksender (4) unter Verwendung einer Sendeverzögerung durchgeführt wird, die zwischen 0 und einem Wert, der nicht Null und kleiner als 1 ms ist schwankt, wobei für jeden Funksender (4) die verwendete Verzögerung gespeichert wird, wobei auf die Anpassungsstufe (54) eine Wiederholung der Verarbeitungsstufe (500) folgt, um noch einmal Bevölkerungszahlen in schädlichen Störbereichen zu schätzen, wobei die Verarbeitungsstufe (500) mit einer parametrisierten Anzahl von Wiederholungen mit Hilfe von Mitteln (13) zur Konfiguration des Systems (1) wiederholt wird, wobei die Anpassungsstufe am Ende der Wiederholungen unter Verwendung einer gespeicherten Kombination von für jeden Sender der Gesamtheit der Sender (4) verwendeten Verzögerungen beendet wird, die es ermöglicht, für die in den schädlichen Störbereichen (Br) geschätzten Bevölkerungszahlen ein Minimum zu erreichen.

2. Verfahren nach Anspruch 1, **dadurch gekennzeichnet, dass** die Stufe (500) zur Verarbeitung der auf das Netz (N) bezogenen Daten aufweist:

   - eine Stufe (50) zur Bestimmung einer Funkversorgung des Netzes (N), die eine Verarbeitung durch das Modul (11) zur Berechnung der die Position der Funksender (4) enthaltenden geographischen Kartendaten (3), der einen Sendepegel von Sendern und einen Empfindlichkeitsschwellenwert für den Funkempfang der Terminals der Zelle (1) spezifizierende Daten (31), und der für ein Gesetz für die Dämpfung bei der Funkwellenausbreitung repräsentative Daten (32) aufweist, so dass für Karten (CN) der Versorgung des Netzes (N) repräsentative Daten generiert werden, die für jeden der Sender (4) Feldstärkepegel der empfangenen Signale in jedem der Pixel (301, 302, 303) spezifizieren;
   - für jeden Funksender (4) eine Stufe (51) zur Schätzung eines Nutzsignals und eines Interferenzsignals in Pixeln des Netzes (N) mit Hilfe einer Zerlegung der Feldstärkepegel der über das Netz (N) empfangenen Signale in eine Nutzkomponente und eine Störkomponente durch das Berechnungsmodul (11), wobei das Berechnungsmodul (11) eine parametrisierbare Gewichtungsfunktion verwendet, um die Zerlegung durchzuführen.

3. Verfahren nach Anspruch 2, wobei die Stufe (500) zur Verarbeitung der auf das Netz (N) bezogenen Daten für jeden Funksender (4) aufweist:

   - eine Stufe (52) zur Berechnung einer Störwahrscheinlichkeit (P1, P2, P3) für jedes Pixel (301, 302, 303), in der zunächst durch das Berechnungsmodul (11) ein repräsentativer Wert des Signal-/Stör-Verhältnisses für jedes Pixel (301, 302, 303) ausgehend von den geschätzten mit den jeweiligen Pixeln verknüpften Signalen berechnet wird, wobei sich die Störung aus den Interferenzen zwischen den Zellen und dem mit der von den Sendern (4) der Zelle verwendeten Kanalbreite zusammenhängenden Rauschen zusammensetzt, und anschließend die Störwahrscheinlichkeit (P1, P2, P3) im Pixel von den Berechnungen des Verhältnisses in den Pixeln durch das Berechnungsmodul (11) abgeleitet wird, und
   - eine Stufe (53) zur Bestimmung eines für die gesamte Bevölkerung in den schädlichen Störbereichen repräsentativen Kriteriums, wobei dieses Kriterium durch das Berechnungsmodul (11) ausgehend von den Störwahrscheinlichkeiten (P1, P, P3) in jedem Pixel und von den demographischen Daten gemäß der Aufteilung des Netzes (N) bestimmt wird.

4. Verfahren nach Anspruch 3, wobei die Stufe (54) zum Anpassen der Auslösungsstufe auf bestimmte Art durch das Berechnungsmodul (11) durchgeführt wird, um ein Minimum der Summe der Kriterien zu erreichen, die durch Integration über die Gesamtheit der Sender (4) berechnet wird, wobei sich das Minimum insbesondere aus mindestens einem Vergleich durch die Vergleichsmittel des Berechnungsmoduls (11) zwischen mehreren verschiedenen Lösungen zur Anpassung der Sendeverzögerungen im Netz (N) ergibt.

5. Verfahren nach Anspruch 3 oder 4, wobei die Störwahrscheinlichkeit (P1, P2, P3) in jedem Pixel (301, 302, 303) aus den Berechnungen des Verhältnisses in den Pixeln der Zelle durch Vergleichsmittel des Berechnungsmoduls (11) abgeleitet wird, wobei ein Minimalverhältniswert in den Speichermitteln (12) gespeichert und von den Vergleichsmitteln verwendet wird, so dass für jedes Pixel bestimmt wird, ob das Minimalverhältnis nicht erreicht ist, und so dass das Erlangen der Störwahrscheinlichkeit (P1, P2, P3) für das Pixel (301, 302, 303) ermöglicht wird.

6. Verfahren nach einem der Ansprüche 2 bis 5, wobei die Übertragungen gemäß dem T-DAB-Standard durchgeführt werden, wobei der parametrisierbare Gewichtungskoeffizient folgende Form hat:

$$Wi = \begin{cases} 0 & wenn\ t \leq -Tu \\ (Tu+t)^2/Tu^2 & wenn\ -Tu < t \leq 0 \\ 1 & wenn\ 0 < t \leq \Delta \\ (Tu+\Delta-t)^2/Tu^2 & wenn\ \Delta < t \leq Tu+\Delta \\ 0 & wenn\ t > Tu+\Delta \end{cases}$$

wobei
Wi den Gewichtungskoeffizienten des i-ten Signals darstellt,
Tu die Nutzperiode eines Symbols darstellt,
$\Delta$ die Zwischensymbol-Verzögerung darstellt, und
t den Ankunftszeitpunkt des Signals im Vergleich zu einem Referenzzeitpunkt darstellt.

7. Verfahren nach einem der Ansprüche 2 bis 5, wobei die Übertragungen gemäß dem DVB-Standard durchgeführt werden, wobei der parametrisierbare Koeffizient die folgende Form aufweist:

$$Wi = \begin{cases} 0 & wenn\ t \leq \Delta - Tp \\ (Tu+t)^2/Tu^2 & wenn\ \Delta - Tp < t \leq 0 \\ 1 & wenn\ 0 < t \leq \Delta \\ (Tu+\Delta-t)^2/Tu^2 & wenn\ \Delta < t \leq Tp \\ 0 & wenn\ t > Tp \end{cases}$$

wobei
Wi den Gewichtungskoeffizienten des i-ten Signals darstellt,
Tu die Nutzperiode eines Symbols darstellt,
$\Delta$ die Zwischensymbol-Verzögerung darstellt,
t den Ankunftszeitpunkt des Signals im Vergleich zu einem Referenzzeitpunkt darstellt, und
Tp das Nutzbeitragsintervall des Signals darstellt.

8. Verfahren nach einem der Ansprüche 1 bis 7, wobei die Anpassungsstufe (54) Werte verwendet, die mit einer Schrittweite zwischen 1 $\mu$s und 45 $\mu$s verteilt sind, in einem Wertebereich, dessen Größe kleiner als 500 $\mu$s bleibt.

9. Verfahren nach einem der Ansprüche 1 bis 8, wobei die Anpassungsstufe (54) Werte verwendet, die mit einer Schrittweite zwischen 5 $\mu$s und 45 $\mu$s verteilt sind, in einem Wertebereich, dessen Größe kleiner als 500 $\mu$s bleibt.

**10.** Verfahren nach einem der Ansprüche 1 bis 9, wobei die Stufe zur Auslösung einer Übertragung zu einem festgesetzten Zeitpunkt eine Teilung eines empfangenen Signals durch den Sender (4) in eine Mehrzahl von Sendesignalen auf einer Mehrzahl von Hilfsträgern aufweist, die einer digitalen Frequenzmodulation des OFDM-Typs folgt, wobei Schutzintervalle (GI) mit einer gleichen festgesetzten Übertragungsdauer zwischen Datenraster eingesetzt werden, die Symbole (S) bilden, die in OFDM moduliert werden, wobei die Übertragungsdauer der Schutzintervalle (GI) eine konstante Funktion der Übertragungsdauer eines Symbols (S) ist.

**11.** Verfahren nach einem der Ansprüche 1 bis 10, **dadurch gekennzeichnet, dass** es eine Stufe zum Speichern von Daten über Verkehrsdichte von Nutzern eines Funkfernsprechnetzes zur Nutzung als Ersatz für die demographischen Daten aufweist.

**12.** Verfahren nach einem der Ansprüche 2 bis 11, wobei die Stufe (50) zum Bestimmen einer Funkversorgung eine Stufe zur Bestimmung durch das Berechnungsmodul (11) für jedes Pixel (301, 302, 303) einer jeweiligen Entfernung zwischen jedem Sender (4) und dem zu betrachtenden Pixel aufweist, auf die eine Stufe zur Korrektur durch das Berechnungsmodul (11) dieser Entfernung durch Berücksichtigung der parametrisierten Verzögerung für die jeweiligen Sender (4) mit Hilfe von Mitteln zur Anpassung der Verzögerungen folgt.

**13.** System (1) zur automatischen Planung von Verzögerungen der Sendezeiten verschiedener Funksender (4), die mit einer gleichen Frequenz Funkzellen erzeugen, um ein in Zeit und Frequenz synchrones digitales Rundfunkübertragungsnetz (N) zu bilden, welches Speichermittel (12) zum Speichern von auf das Netz (N) bezogenen Daten aufweist, welche für geographische Bereiche repräsentative Daten (3) aufweisen, die gemäß der Aufteilung des Netzes (N) in eine Mehrzahl von Punkten oder Pixeln (301, 302, 303) aufgeteilt sind und die Position der Funksender (4) enthalten, demographische Daten entsprechend der Aufteilung des Netzes, einen Sendepegel von Sendern und einen Empfindlichkeitsschwellenwert für den Funkempfang der Terminals der Zelle (1) spezifizierende Daten (31), für ein Gesetz für die Dämpfung bei der Funkwellenausbreitung repräsentative Daten (32), und für eine Dauer der Schutzintervalle (GI) repräsentative Daten, die zwischen Datenrastern vorgesehen sind, wobei das System (1) ferner ein Berechnungsmodul (11) und Mittel zur Parametrisierung einer Mehrzahl von Funksendern (4) aufweist, **dadurch gekennzeichnet, dass** es Mittel zum Auslösen einer Übertragung zu einem bestimmten Zeitpunkt für jeden Funksender (4) aufweist, wobei das Berechnungsmodul (11) eingerichtet ist, um durch eine Verarbeitung der auf das Netz (N) bezogenen Daten Daten zu berechnen, die Bevölkerungszahlen in schädlichen Störbereichen darstellen, wobei die Parametrisierungsmittel eingerichtet sind, Verzögerungen zu verwenden, die in den Speichermitteln (12) gespeichert sind, Mittel zur Steuerung der Auslösungsmittel, die vorgesehen sind, um die Übertragung in Bezug auf jeden Funksender (4) zu verzögern, mit einer Verzögerung die zwischen 0 und einem Wert, der nicht Null und kleiner als 1 ms ist schwankt, wobei die Verzögerung für jeden Funksender (4) gespeichert wird, Mittel zur Anpassung der Verzögerungen, die mit den Steuermitteln gekoppelt sind, um verschiedene Kombinationen von Verzögerungen für die Gesamtheit der Sender (4) auszugeben, wobei das Berechnungsmodul (11) mit Wiederholungsmitteln ausgestattet ist, die es ermöglichen, erneut Bevölkerungszahlen in schädlichen Störbereichen für unterschiedliche Verzögerungskombinationen errechnen zu lassen, Mittel (13) zur Konfiguration des Systems (1), die mit dem Berechnungsmodul (11) gekoppelt sind, um eine Anzahl von Wiederholungen auszugeben, die es ermöglichen, die Wiederholungsmittel zu deaktivieren, wobei die Steuermittel eingerichtet sind, aus den durch die Verzögerungsanpassungsmittel ausgegebenen Kombinationen eine Verzögerungskombination für die Gesamtheit der Sender (4) zu verwenden, die dem Erlangen eines Minimums für die geschätzten Bevölkerungszahlen durch das Berechnungsmodul (11) entspricht.

**14.** System (1) nach Anspruch 13, wobei das Berechnungsmodul (11) zum Berechnen der die Bevölkerungszahlen in schädlichen Störbereichen (Br) darstellenden Daten aufweist:

- Mittel zum Bestimmen einer Funkversorgung des Netzes (N), die eingerichtet sind, die geographischen Kartendaten (3) mit der Position der Funksender (4), die einen Sendepegel von Sendern und einen Empfindlichkeitsschwellenwert für den Funkempfang der Terminals der Zelle (1) spezifizierenden Daten (31), und die für ein Gesetz für die Dämpfung bei der Funkwellenausbreitung repräsentative Daten (32) zu bestimmen, um Daten zu generieren, die repräsentativ für Karten (CN) der Netzversorgung (N) sind, die für jeden der Sender (4) Feldstärkepegel der in jedem der Pixel (301, 302, 303) empfangenen Signale spezifizieren,
- Mittel für jeden Funksender (4) zum Schätzen eines Nutzsignals und eines Interferenzsignals in den Pixeln des Netzes (N), wobei diese Schätzungsmittel eingerichtet sind, Feldstärkepegel der über das Netz (N) empfangenen Signale in eine Nutzkomponente und eine Störkomponente zu zerlegen, und eine parametrisierte Gewichtungsfunktion mit Hilfe der Konfigurationsmittel (13) zu verwenden, um die Zerlegung durchzuführen,
- Mittel zur Bestimmung für jeden Funksender (4) einer Störwahrscheinlichkeit (P1, P2, P3) für jedes Pixel (301, 302, 303), die eingerichtet sind, einen repräsentativen Wert des Signal-/Stör-Verhältnisses für jedes Pixel (301, 302, 303) ausgehend von den geschätzten mit den jeweiligen durch die Schätzungsmittel ausgegebenen Pixeln verknüpften Signalen zu berechnen, wobei die Störung aus den Interferenzen zwischen den Zellen und dem Rauschen besteht, das mit der Größe des von den Sendern (4) der Zelle verwendeten Kanals zusammenhängt, wobei die Bestimmungsmittel die Störwahrscheinlichkeit (P1, P2. P3) im Pixel ausgehend von den Berechnungen des Verhältnisses in den Pixeln berechnen,

- Verknüpfungsmittel, die es für jeden Sender (4) ermöglichen, ein für die Gesamtbevölkerung in den schädlichen Störzonen (Br) repräsentatives Kriterium zu bestimmen, wobei dieses Kriterium durch Verknüpfung der Störwahrscheinlichkeit (P1, P2, P3) in jedem Pixel (301, 302, 303) und der demographischen Daten entsprechend der Aufteilung des Netzes (N) bestimmt wird.

15. System (1) nach Anspruch 14, wobei das Berechnungsmodul (11) die Kombination von durch die Steuermittel zu verwendenden Verzögerungen durch Verwendung der Vergleichsmittel des Berechnungsmoduls (11) bestimmt, die vorgesehen sind, aus einer Mehrzahl von Summen der Kriterien, die jeweils den verschiedenen Verzögerungskombinationen entsprechen, ein Minimum der Summe der Kriterien zu bestimmen, die berechnet wird durch Integration über die Gesamtheit der Sender (4).

16. System (1) nach Anspruch 14 oder 15, wobei die Störwahrscheinlichkeit (P1, P2, P3) in jedem Pixel (301, 302, 303) abgeleitet wird aus den Berechnungen des Verhältnisses in den Pixeln der Zelle durch Vergleichsmittel des Berechnungsmoduls (11), wobei ein minimaler Verhältniswert in den Speichermitteln (12) gespeichert und von den Vergleichsmitteln verwendet wird, um für jedes Pixel zu bestimmen, ob das minimale Verhältnis nicht erreicht ist, und **dadurch** den Erhalt der Störwahrscheinlichkeit für das Pixel (301, 302, 303) zu ermöglichen.

17. Netz für die Rundfunkübertragung mit mindestens einem Fernseh- oder Radioprogramm, **dadurch gekennzeichnet, dass** es aus einem Fernsprechnetz besteht, welches eine Vielzahl von Sendestandorten aufweist, die entsprechende Funkzellen (20) bilden, die gemeinsam eine Funkversorgung definieren, und dass all diese Standorte mit Sendern (4) für die Fernseh- oder Radioübertragung ausgestattet sind, und dass sie alle mit einer gleichen UHF-Frequenz parametrisiert sind, um eine Funkzelle zu erzeugen, wobei die Sender (4) derart eingerichtet sind, dass sie Raster senden, die ein Symbol (S) bilden, das mit einem Schutzintervall (GI) OFDM-moduliert ist, welches einem Bruchteil zwischen einem Viertel und einem Sechzehntel der Übertragungsdauer eines Rasters entspricht, wobei die Sender (4) eingerichtet sind, um ihre entsprechende Übertragung mit einer bestimmten Verschiebung oder Verzögerung auszulösen, die zwischen 0 und einem Wert, der nicht Null und kleiner als 1 ms ist, und der nicht das Doppelte der Dauer des Schutzintervalls (GI) überschreitet, schwankt, wobei das Netz eine Kombination von Verzögerungen verwendet, die angepasst ist, um die Anzahl der schädlichen Störbereiche (Br) zu minimieren, die mit bevölkerten Bereichen zusammenfallen.

**Fig. 1**

41

GI

S

n-1    n    n+1

42

n-1    n    n+1

Temps

Ti

## Fig. 2

CL

6

CV

40

GI

n-1    n    n+1

45

Ti

## Fig. 3

**Fig. 4**

**Fig. 5**

**Fig. 6**

**Fig. 7**

**Fig. 8**

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Littérature non-brevet citée dans la description**

- DIGITAL SINGLE FREQUENCY NETWORKS IMPROVING OPTIMIZATION STRATEGIESOPTIMIZATION STRATEGIES BY PARALLEL COMPUTING. **BEUTLER R.** FREQUENZ, SCHIELE UND SCHON. Mai 1998, vol. 52, 90-95

- **ROLAND BRUGGER ; DAVID HEMINGWAY.** Impact on coverage of intersymbol interference and FFT window positionning. *EBU technical review,* Juillet 2003